# EUROPEAN PATENT APPLICATION

(11) **EP 4 827 175 A1**
(43) Date of publication of application: **21.10.2026**
(21) Application number: 24911568.4
(22) Date of filing: 27.12.2024
(51) Int. Cl.: H04W 48/18

(54) **COMMUNICATION METHOD, APPARATUS AND SYSTEM**

(30) Priority: 29.12.2023 CN 202311869410
(71) Applicant: Huawei Technologies Co., Ltd., Shenzhen, Guangdong 518129 (CN)
(72) Inventor: GAO, Guojuan, Shenzhen, Guangdong 518129 (CN); LI, Hancheng, Shenzhen, Guangdong 518129 (CN); WU, Wenfu, Shenzhen, Guangdong 518129 (CN)
(74) Representative: Huawei European IPR
(86) International application number: PCT/CN2024/143449
(87) International publication number: WO 2025/140652

(57) **Abstract**

Embodiments of this application disclose a communication method, an apparatus, and a system, and relate to the field of communication technologies, to help flexibly select an edge application service for a terminal device. The method includes: A first network element obtains one or more of the following parameters: a latency parameter or a load parameter, where the latency parameter includes a latency of transmission between at least one edge application service and a user plane function network element, and the load parameter includes a load of the at least one edge application service. The first network element selects a target edge application service from the at least one edge application service based on the obtained parameter.

## Description

This application claims priority to Chinese Patent Application No. 202311869410.5, filed with the China National Intellectual Property Administration on December 29, 2023 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, an apparatus, and a system.

### BACKGROUND

For some services that require low latency and high bandwidth, such as virtual reality (virtual reality, VR), cloud gaming, or industrial automation services, deploying application services at a network edge can provide users with better service experience. Such application services deployed at the network edge may be referred to as edge application services (edge application server, EAS).

Currently, a network typically selects an edge application service close to an access location of a terminal device. When the access location of the terminal device does not change significantly, the network may be unable to flexibly adjust selection of an appropriate edge application service for the terminal device.

### SUMMARY

Embodiments of this application provide a communication method, an apparatus, and a system, so that when an access location of a terminal device does not change significantly, flexible adjustment can be performed to select an appropriate edge application service for the terminal device.

The following technical solutions are used in embodiments of this application.

According to a first aspect, a communication method is provided. The method may be performed by a first network element; or may be performed by a component (for example, a processor, a chip, or a chip system) of the first network element; or may be implemented by a logical module or software that can implement all or some functions of the first network element. The following uses an example in which the first network element is an execution body of the method for description. The method includes: The first network element obtains one or more of the following parameters: a latency parameter or a load parameter, where the latency parameter includes a latency of transmission between at least one edge application service and a user plane function network element, and the load parameter includes a load of the at least one edge application service. The first network element selects a target edge application service from the at least one edge application service based on the obtained parameter.

Selecting the target edge application service may also be referred to as determining the target edge application service. In some scenarios, selecting the target edge application service may also be understood as reselecting the target edge application service. Based on the communication method provided in this embodiment of this application, the first network element may select the target edge application service based on the latency parameter and/or the load parameter related to the edge application service. Compared with a current solution in which an edge application service is selected by considering only an access location of a terminal device, the solution for selecting an edge application service provided in this application is more flexible. When the access location of the terminal device does not change significantly, adjustment may be performed based on the latency parameter and/or the load parameter, to select an appropriate edge application service for the terminal device. In addition, in the solution for selecting an edge application service provided in this embodiment of this application, a factor such as a network status or an application status is considered, and the target edge application service with better performance may be selected. For example, when the network status factor is considered, the target edge application service may be selected based on the latency parameter related to the edge application service, to avoid that an edge application service with an excessively high transmission latency is selected and user experience is affected. When the application status factor is considered, the target edge application service may be selected based on the load parameter related to the edge application service, to avoid selecting an edge application service that cannot provide a service in a timely manner due to excessively large load pressure.

In a possible implementation, the method further includes: The first network element determines a target user plane function network element based on the obtained parameter.

Selecting the target user plane function network element may also be referred to as determining the target user plane function network element. In some scenarios, selecting the target user plane function network element may also be understood as reselecting the target user plane function network element. In this embodiment of this application, the target user plane function network element is a user plane function network element connected to the target edge application service. Based on this solution, the first network element may further determine the target user plane function network element based on the obtained parameter. This embodiment of this application provides a new manner of determining the target user plane function network element. In addition, because the edge application service may access a core network through the user plane function network element, the target user plane function network element suitable for the target edge application service may be determined based on the parameter related to the edge application service. For example, if the target user plane function network element is determined based on the latency parameter, selecting a target user plane function network element with an excessively high transmission latency with the target edge application service can be avoided.

In a possible implementation, when the parameter obtained by the first network element includes the latency parameter, the target user plane function network element satisfies a latency requirement. The latency requirement includes a latency requirement for transmission between the edge application service and the user plane function network element, or a latency requirement for transmission between the edge application service and a terminal device.

Based on this solution, when determining the target user plane function network element, the first network element may exclude a user plane function network element that does not satisfy the latency requirement, to avoid selecting a user plane function network element that has an excessively high transmission latency with the target edge application service or causes an excessively high transmission latency between the target edge application service and the terminal device and leads to impact on user experience.

In a possible implementation, the method further includes: The first network element sends information about the target user plane function network element to a session management function network element.

Based on this solution, the first network element may provide the information about the target user plane function network element for the session management function network element, to help the session management network element establish a user plane channel between the target user plane function network element and the terminal device. Alternatively, the session management network element may establish or modify an uplink classifier (uplink classifier, ULCL)-related session based on the target user plane function network element.

In a possible implementation, the method further includes: The first network element sends information about the target edge application service to the session management function network element.

In a possible implementation, when the parameter obtained by the first network element includes the latency parameter, the target edge application service is an edge application service that satisfies the latency requirement. The latency requirement includes the latency requirement for transmission between the edge application service and the user plane function network element, or the latency requirement for transmission between the edge application service and the terminal device. When the parameter obtained by the first network element includes the load parameter, the target edge application service is an edge application service that satisfies a load requirement. The load requirement is a load requirement for the edge application service.

Based on this solution, when determining the target edge application service, the first network element may exclude an edge application service that does not satisfy the latency requirement, to avoid selecting an edge application service that has an excessively high transmission latency with the terminal device (because the edge application service may access a core network through the user plane function network element, a latency of transmission between the edge application service and the user plane function network element is also an important factor that affects a latency of transmission between the edge application service and the terminal device) and leads to impact on user experience.

In a possible implementation, the method further includes: The first network element receives a first message from the session management network element, where the first message is used to request to establish a session, and the first message includes one or more of the following requirements: the latency requirement or the load requirement. Alternatively, the first network element receives one or more of the following requirements from an application function network element: the latency requirement or the load requirement.

Based on this solution, the first network element may obtain the latency requirement or the load requirement from the session management function network element or the application function network element.

In a possible implementation, the method further includes: The first network element receives a second message from the application function network element, where the second message includes first indication information, and the first indication information indicates that a load of a source edge application service exceeds a load threshold. The first network element determines, based on the second message, to select the target edge application service.

In this application, if there is already an edge application service providing a service for the terminal device before the first network element determines the target edge application service, the edge application service providing the service for the terminal device may be referred to as the source edge application service. In this scenario, based on this solution, the application function network element may notify the first network element when the load of the source edge application service exceeds a specific threshold, to trigger the first network element to select the target edge application service, that is, reselect an edge application service to replace the source edge application service, to avoid a further increase in the load of the source edge application service.

In a possible implementation, the method further includes: The first network element sends a third message to the application function network element, where the third message is used to request the application function network element to monitor whether the load of the source edge application service exceeds the load threshold.

Based on this solution, the application function network element may monitor the load of the source edge application service based on a request of the first network element, and provide feedback for the first network element in a timely manner when the load of the source edge application service exceeds the threshold.

In a possible implementation, the first network element may obtain the parameter in the following manner: The first network element receives a fourth message from the user plane function network element, a network capability exposure function network element, or the application function network element, where the fourth message includes the one or more parameters.

Based on this solution, the first network element may obtain, from a plurality of types of network elements, the parameter used to determine the target edge application service.

In a possible implementation, the method further includes: The first network element sends a fifth message, where the fifth message is used to request latency-related information or load-related information. In this case, the fourth message is a response message for the fifth message.

Based on this solution, the first network element may request a parameter needed by the first network element from another network element.

According to a second aspect, a communication method is provided. The method may be performed by a session management function network element; or may be performed by a component (for example, a processor, a chip, or a chip system) of the session management function network element; or may be implemented by a logical module or software that can implement all or some functions of the session management function network element. The following uses an example in which the session management function network element is an execution body of the method for description. The method includes: The session management function network element sends one or more of the following requirements to a first network element: a latency requirement or a load requirement, where the one or more requirements are used by the first network element to determine a target edge application service, the latency requirement includes a latency requirement for transmission between an edge application service and a user plane function network element or a latency requirement for transmission between an edge application service and a terminal device, and the load requirement is a load requirement for the edge application service. Then, the session management network element receives information about the target edge application service from the first network element.

Based on the communication method provided in this embodiment of this application, the session management network element may provide the first network element with a requirement related to the edge application service, so that the first network element can determine the target edge application service based on the obtained requirement. Compared with a current solution in which an edge application service is selected by considering only an access location of a terminal device, the solution for selecting an edge application service provided in this application is more flexible. When the access location of the terminal device does not change significantly, adjustment may be performed based on the latency requirement and/or the load requirement, to select an appropriate edge application service for the terminal device. In addition, in the solution for selecting an edge application service provided in this embodiment of this application, a factor such as a network status or an application status is considered, and the target edge application service with better performance may be selected. For example, in consideration of the network status factor, the latency requirement may be provided for the first network element, so that the first network element excludes an edge application service that does not satisfy the latency requirement, to avoid that an edge application service with an excessively high transmission latency is selected and user experience is affected. In consideration of the application status factor, the session management function network element may provide the load requirement for the first network element, so that the first network element excludes an edge application service that does not satisfy the load requirement, to avoid selecting an edge application service that cannot provide a service in a timely manner due to excessively large load pressure. In addition, the session management network element provides a requirement for the first network element, and the first network element selects the target edge application service, thereby reducing pressure of the session management network element in centralized processing.

In a possible implementation, the one or more requirements are further used by the first network element to determine a target application function network element. In this case, the session management network element may further receive information about the target application function network element from the first network element.

Based on this solution, the first network element may further determine a target user plane function network element based on the requirement provided by the session management network element. This embodiment of this application provides a new manner of determining the target user plane function network element. In addition, because the edge application service may access a core network through the user plane function network element, the target user plane function network element suitable for the target edge application service may be determined based on the requirement related to the edge application service. For example, if the target user plane function network element is determined based on the latency requirement, a user plane function network element that does not satisfy the latency requirement may be excluded, to avoid selecting a target user plane function network element that has an excessively high transmission latency with the target edge application service and affects user experience.

In a possible implementation, the one or more requirements are carried in a first message, and the information about the target edge application service is carried in a response message for the first message. The first message is used to request to establish a session.

Based on this solution, the session management network element may provide a requirement for the first network element in a session establishment process. In other words, the target edge application service may be selected in the session establishment process.

According to a third aspect, a communication method is provided. The method may be performed by a user plane function network element; or may be performed by a component (for example, a processor, a chip, or a chip system) of the user plane function network element; or may be implemented by a logical module or software that can implement all or some functions of the user plane function network element. The following uses an example in which the user plane function network element is an execution body of the method for description. The method includes: The user plane function network element receives a fifth message from a first network element, where the fifth message is used to request latency-related information or load-related information. The user plane function network element sends a fourth message to the first network element, where the fourth message is a response message for the fifth message, and the fourth message includes one or more of the following parameters: a latency parameter or a load parameter. The latency parameter includes a latency of transmission between at least one edge application service and the user plane function network element, and the load parameter includes a load of at least one candidate edge application service. The one or more parameters included in the fourth message are used by the first network element to select a target edge application service from the at least one candidate edge application service.

Based on the communication method provided in this embodiment of this application, the user plane function network element may provide, for the first network element in response to a request of the first network element, the latency parameter and/or the load parameter related to the edge application service, so that the first network element may select the target edge application service based on the obtained parameter. Compared with a current solution in which an edge application service is selected by considering only an access location of a terminal device, the solution for selecting an edge application service provided in this application is more flexible. When the access location of the terminal device does not change significantly, adjustment may be performed based on the latency parameter and/or the load parameter, to select an appropriate edge application service for the terminal device. In addition, in the solution for selecting an edge application service provided in this embodiment of this application, a factor such as a network status or an application status is considered, and the target edge application service with better performance may be selected. For details, refer to the technical effects of the communication method in the first aspect.

In a possible implementation, the latency parameter further includes one or more of the following: a latency of transmission between the user plane function network element and an access network device, or a latency of transmission between the user plane function network element and an intermediate user plane function network element, and the intermediate user plane function network element is configured to transfer information between the user plane function network element and the access network device.

Based on this solution, for end-to-end (terminal device to edge application service) transmission, not only a transmission path between the user plane function network element and the edge application service is considered, but also a transmission path between the user plane function network element and the access network device and a transmission path between the user plane function network element and the intermediate user plane function network element are considered. The user plane function network element may obtain the latency parameter related to the user plane function network element, and provide the latency parameter for the first network element, so that the first network element can select an appropriate target edge application service in accordance with a plurality of latency parameters.

According to a fourth aspect, a communication method is provided. The method may be performed by an application function network element; or may be performed by a component (for example, a processor, a chip, or a chip system) of the application function network element; or may be implemented by a logical module or software that can implement all or some functions of the application function network element. The following uses an example in which the application function network element is an execution body of the method for description. The method includes: The application function network element receives a fifth message from a first network element, where the fifth message is used to request latency-related information or load-related information. Then, the application function network element sends a fourth message to the first network element, where the fourth message is a response message for the fifth message, and the fourth message includes one or more of the following parameters: a latency parameter or a load parameter. The latency parameter includes a latency of transmission between at least one edge application service and a user plane function network element, and the load parameter includes a load of the at least one edge application service. The one or more parameters included in the fourth message are used by the first network element to select a target edge application service from the at least one edge application service.

Based on the communication method provided in this embodiment of this application, the application function network element may provide, for the first network element in response to a request of the first network element, the latency parameter and/or the load parameter related to the edge application service, so that the first network element may select the target edge application service based on the obtained parameter. Compared with a current solution in which an edge application service is selected by considering only an access location of a terminal device, the solution for selecting an edge application service provided in this application is more flexible. When the access location of the terminal device does not change significantly, adjustment may be performed based on the latency parameter and/or the load parameter, to select an appropriate edge application service for the terminal device. In addition, in the solution for selecting an edge application service provided in this embodiment of this application, a factor such as a network status or an application status is considered, and the target edge application service with better performance may be selected. For details, refer to the technical effects of the communication method in the first aspect.

In a possible implementation, the method further includes: The application function network element sends one or more of the following requirements to the first network element: a latency requirement or a load requirement. The one or more requirements are used by the first network element to select the target edge application service. The latency requirement includes a latency requirement for transmission between the edge application service and the user plane function network element, or a latency requirement for transmission between the edge application service and a terminal device, and the load requirement is a load requirement for the edge application service.

Based on this solution, the application function network element may further provide the first network element with a requirement related to the edge application service, so that the first network element can determine the target edge application service based on the obtained requirement, to avoid that an edge application service that does not satisfy the requirement is selected and user experience is affected.

In a possible implementation, the method further includes: The application function network element sends a second message to the first network element, where the second message includes first indication information, the first indication information indicates that a load of a source edge application service exceeds a load threshold, and the second message is used by the first network element to determine to select the target edge application service.

Based on this solution, the application function network element may notify the first network element when the load of the source edge application service exceeds a specific threshold, to trigger the first network element to select the target edge application service, that is, reselect an edge application service to replace the source edge application service, to avoid a further increase in the load of the source edge application service.

In a possible implementation, the method further includes: The application function network element receives a third message from the first network element, where the third message is used to request the application function network element to monitor whether the load of the source edge application service exceeds the load threshold. The application function network element monitors, based on the third message, whether the load of the source edge application service exceeds the load threshold.

Based on this solution, the application function network element may monitor the load of the source edge application service based on a request of the first network element, and provide feedback for the first network element in a timely manner when the load of the source edge application service exceeds the threshold.

According to a fifth aspect, a communication apparatus is provided to implement the foregoing methods. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible designs, the communication apparatus may include a transceiver module and a processing module. The transceiver module may also be referred to as a transceiver unit, and is configured to implement a sending function and/or a receiving function in the first aspect, the second aspect, the third aspect, or the fourth aspect and any possible implementation of the first aspect, the second aspect, the third aspect, or the fourth aspect. The transceiver module may include a transceiver circuit, a transceiver machine, a transceiver, or a communication interface. The processing module may be configured to implement a processing function in the first aspect, the second aspect, the third aspect, or the fourth aspect and any possible implementation of the first aspect, the second aspect, the third aspect, or the fourth aspect.

In some possible designs, the transceiver module includes a sending module and a receiving module, respectively configured to implement the sending function and the receiving function in the first aspect, the second aspect, the third aspect, or the fourth aspect and any possible implementation of the first aspect, the second aspect, the third aspect, or the fourth aspect.

According to a sixth aspect, a communication apparatus is provided, including a processor and a communication interface. The communication interface is configured to communicate with a module outside the communication apparatus. The processor is configured to execute a computer program or instructions, to cause the communication apparatus to perform the method according to any one of the foregoing aspects.

According to a seventh aspect, a communication apparatus is provided, including at least one processor. The processor is configured to execute a computer program or instructions stored in a memory, to cause the communication apparatus to perform the method according to any one of the foregoing aspects. In a possible implementation, the memory may be coupled to the processor, or may be independent of the processor. In a possible implementation, the communication apparatus further includes the memory. Optionally, the memory is integrated with the processor.

In the fifth aspect to the seventh aspect, the communication apparatus may be the first network element in any one of the first aspect or the implementations of the first aspect, or an apparatus including the first network element, or an apparatus, for example, a chip, included in the first network element. Alternatively, the communication apparatus may be the session management function network element in any one of the second aspect or the implementations of the second aspect, an apparatus including the session management function network element, or an apparatus, for example, a chip, included in the session management function network element. Alternatively, the communication apparatus may be the user plane function network element in any one of the third aspect or the implementations of the third aspect, or an apparatus including the user plane function network element, or an apparatus, for example, a chip, included in the user plane function network element. Alternatively, the communication apparatus may be the application function network element in any one of the fourth aspect or the implementations of the fourth aspect, or an apparatus including the application function network element, or an apparatus, for example, a chip or a chip system, included in the application function network element.

According to an eighth aspect, a computer-readable storage medium is provided. The computer-readable storage medium stores a computer program or instructions. When the computer program or the instructions are run on a communication apparatus, the communication apparatus is caused to perform the method in any one of the foregoing aspects or any one of the implementations of the foregoing aspects.

According to a ninth aspect, a computer program product including instructions is provided. When the computer program product runs on a communication apparatus, the communication apparatus is caused to perform the method in any one of the foregoing aspects or any one of the implementations of the foregoing aspects.

According to a tenth aspect, a communication apparatus is provided (for example, the communication apparatus may be a chip or a chip system). The communication apparatus includes a processor, configured to implement the functions in any one of the foregoing aspects or any one of the implementations of the foregoing aspects.

In some possible designs, the communication apparatus includes a memory, and the memory is configured to store necessary program instructions and data.

In some possible designs, when the apparatus is a chip system, the apparatus may include a chip, or may include a chip and another discrete component.

It may be understood that, when the communication apparatus provided in any one of the fifth aspect to the seventh aspect is a chip, the foregoing sending action/function may be understood as an output, and the foregoing receiving action/function may be understood as an input.

For technical effects brought by any one of the implementations in the fifth aspect to the tenth aspect, refer to the technical effects brought by corresponding implementations in the first aspect to the fourth aspect. Details are not described herein again.

It should be noted that various possible implementations of any one of the foregoing aspects may be combined, provided that there is no conflict between the solutions.

According to an eleventh aspect, a communication system is provided. The communication system includes a first network element and a second network element. The first network element is configured to send a fifth message to the second network element, where the fifth message is used to request latency-related information or load-related information. The second network element is configured to receive the fifth message, and send a fourth message to the first network element, where the fourth message is a response message for the fifth message, the fourth message includes one or more of the following parameters: a latency parameter or a load parameter, the latency parameter includes a latency of transmission between at least one edge application service and a user plane function network element, and the load parameter includes a load of the at least one edge application service. The first network element is further configured to receive the fourth message, and select a target edge application service from the at least one edge application service based on the parameter included in the fourth message.

In some possible designs, the first network element is further configured to perform the method in any implementation of the first aspect.

In some possible designs, the second network element is a user plane function network element, a network capability exposure function network element, or an application function network element.

In some possible designs, the second network element is an application function network element, and the second network element is further configured to perform the method in any implementation of the third aspect.

In some possible designs, the communication system further includes a session management function network element, and the session management function network element is configured to perform the method in any implementation of the second aspect.

### BRIEF DESCRIPTION OF DRAWINGS

FIG. 1A to FIG. 1D are diagrams of architectures of communication systems to which an embodiment of this application is applicable;
FIG. 2 is a schematic flowchart of a communication method according to an embodiment of this application;
FIG. 3 is a diagram of obtaining a latency parameter and/or a load parameter according to an embodiment of this application;
FIG. 4 is a diagram of triggering a first network element to select a target edge application service according to an embodiment of this application;
FIG. 5 is a diagram of selecting a target edge application service in a session establishment procedure according to an embodiment of this application;
FIG. 6 is a diagram of obtaining a latency requirement and/or a load requirement in a session establishment procedure according to an embodiment of this application;
FIG. 7A and FIG. 7B are a diagram of obtaining a latency parameter and/or a load parameter according to an embodiment of this application;
FIG. 8 is another diagram of obtaining a latency parameter according to an embodiment of this application;
FIG. 9 is another diagram of obtaining a latency parameter according to an embodiment of this application;
FIG. 10 is a diagram of selecting a target edge application service after session establishment is completed according to an embodiment of this application;
FIG. 11 is a diagram of a communication apparatus according to an embodiment of this application; and
FIG. 12 is a diagram of another communication apparatus according to an embodiment of this application.

### DESCRIPTION OF EMBODIMENTS

Embodiments of this application provide a communication method, an apparatus, and a system. The following describes specific implementations of the communication method provided in embodiments of this application. In the descriptions of embodiments of this application, unless otherwise specified, "/" represents an "or" relationship between associated objects. For example, A/B may represent A or B. "And/or" in embodiments of this application describes only an association relationship of associated objects and represents that three relationships may exist. For example, A and/or B may represent the following three cases: Only A exists, both A and B exist, and only B exists. A and B may be singular or plural. In addition, in the descriptions of this application, unless otherwise specified, "a plurality of" means two or more. "At least one of the following items (pieces)" or a similar expression thereof means any combination of these items, including a single item (piece) or any combination of a plurality of items (pieces). For example, at least one item (piece) of a, b, or c may represent a, b, c, a and b, a and c, b and c, or a, b, and c, where a, b, and c may be singular or plural. In addition, for ease of clearly describing the technical solutions in embodiments of this application, the words such as "first" and "second" are used to distinguish between same or similar items whose functions are basically the same in embodiments of this application. A person skilled in the art may understand that the words such as "first" and "second" do not limit a quantity or an execution order, and the words such as "first" and "second" do not necessarily indicate a specific difference. In addition, in embodiments of this application, words such as "example" or "for example" are used to represent giving examples, illustrations, or descriptions. Any embodiment or design solution described as "example" or "for example" in embodiments of this application should not be construed as being more preferred or advantageous than other embodiments or design solutions. Specifically, the words such as "example" or "for example" are used to present a related concept in a specific manner for ease of understanding.

In embodiments of this application, "indication" may include a direct indication and an indirect indication, or may include an explicit indication and an implicit indication. Information indicated by a piece of information is referred to as to-be-indicated information. In a specific implementation process, the to-be-indicated information is indicated in a plurality of manners. By way of example and not limitation, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement order of a plurality of pieces of information that is pre-agreed on (for example, stipulated in a protocol), to reduce indication overheads to some extent. In addition, a common part of information may be identified and indicated in a unified manner, to reduce indication overheads caused by separately indicating same information.

It should be understood that the to-be-indicated information may be sent as a whole, or may be divided into a plurality of pieces of sub-information for separate sending. In addition, sending periods and/or sending occasions of the sub-information may be the same or may be different. A specific sending method is not limited in embodiments of this application. The sending periods and/or the sending occasions of the sub-information may be predefined, for example, predefined according to a protocol, or may be configured by a transmit end device by sending configuration information to a receive end device.

In embodiments of this application, "predefine", "predefinition", "preconfigure", "preconfiguration", or "local configuration" may be implemented by pre-storing corresponding code or a corresponding table in a device or in another manner that can indicate related information. For example, the code, the table, or the related information may be burnt in the device before device delivery, or may be configured when the device accesses a network for the first time. A specific implementation thereof is not limited in embodiments of this application. "Storing" may mean storing in one or more memories. The one or more memories may be separately disposed, or may be integrated into an encoder or a decoder, a processor, or a communication apparatus. Alternatively, a part of the one or more memories may be separately disposed, and a part of the one or more memories may be integrated into a decoder, a processor, or a communication apparatus. A type of the memory may be a storage medium in any form. This is not limited in embodiments in this application.

In embodiments of this application, descriptions such as "when ...", "in a case of ...", and "if" all mean that a device performs corresponding processing in a specific objective situation, and are not intended to limit time. The descriptions do not mean that the device is required to have a determining action during implementation, and do not mean any other limitation.

In embodiments of this application, "sending information to... (using a first network element as an example)" may be understood as that a destination end of the information is the first network element, and may include directly or indirectly sending the information to the first network element. "Receiving information from... (using a first network element as an example)" may be understood as that a source end of the information is the first network element, and may include directly or indirectly receiving the information from the first network element. Information may undergo necessary processing, for example, a format change, between a source end and a destination end of information sending. However, the destination end can understand valid information from the source end. Similar expressions in embodiments of this application may be understood similarly. Details are not described herein again.

The technical solutions provided in this application may be applied to various communication systems, for example, a long term evolution (long term evolution, LTE) system, a 4th generation (4th generation, 4G) mobile communication system, a 5th generation (5th generation, 5G) mobile communication system and an evolved system thereof, a non-terrestrial network (non-terrestrial network, NTN) system, a vehicle to everything (vehicle to everything, V2X) system, an LTE and new radio (new radio, NR) hybrid networking system, a device-to-device (device-to-device, D2D) system, a machine-to-machine (machine-to-machine, M2M) communication system, an internet of things (internet of things, IoT), and a future next-generation communication system, for example, a 6th generation (6th generation, 6G) mobile communication system. In addition, the terms "system" and "network" may be interchanged.

It should be noted that the network architecture and the service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

It should be noted that a name of a network element in this specification is merely a possible example name. If a name actually used for the network element in a subsequent communication network (for example, a 6G network) is different from the name in this specification, application of a communication method provided in embodiments of this application is not affected.

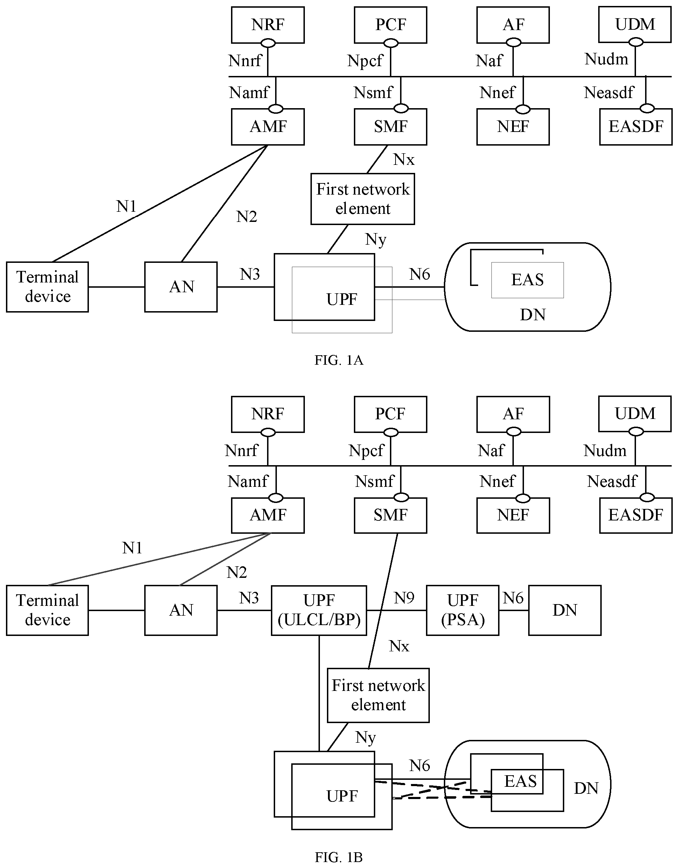

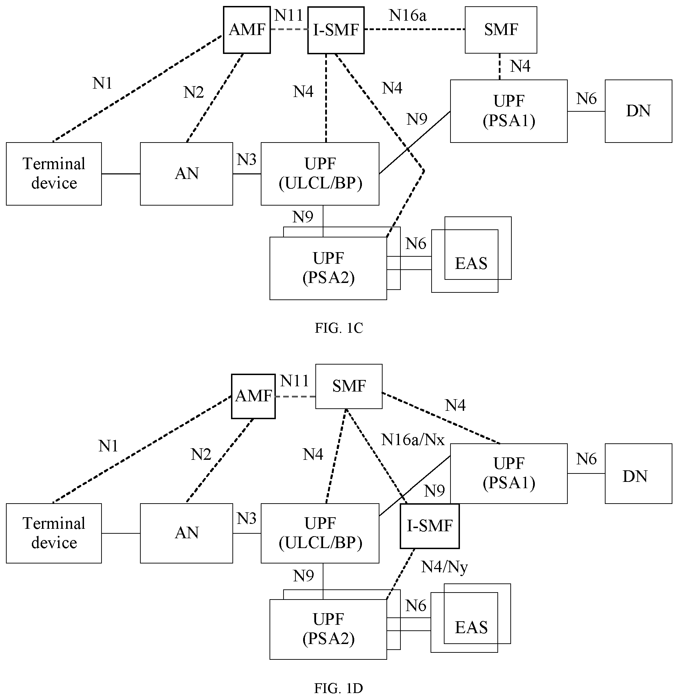

An example in which embodiments of this application are applied to a 5G system is used. FIG. 1A, FIG. 1B, FIG. 1C, and FIG. 1D are diagrams of architectures of possible nonrestrictive communication systems to which embodiments of this application are applicable. A communication system to which embodiments of this application are applicable includes a terminal device, a core network (core network, CN), and an access network (access network, AN). Logically, the core network may be divided into two parts: a user plane and a control plane. The control plane is responsible for mobile network management, and the user plane is responsible for service data transmission.

As shown in FIG. 1A, FIG. 1B, FIG. 1C, and FIG. 1D, in the communication system, a core network user plane function (user plane function, UPF) network element, an access network element (AN in FIG. 1A, FIG. 1B, FIG. 1C, and FIG. 1D), and a terminal device jointly form a user plane network element of a 5G network element (5G system, 5GS). The control plane of the core network mainly includes the following network elements: an access and mobility management function (core access and mobility management function, AMF) network element, a session management function (session management function, SMF) network element, a network exposure function (network exposure function, NEF) network element, a network repository function (network repository function, NRF) network element, a policy control function (policy control function, PCF) network element, an application function (application function, AF) network element, a unified data management (unified data management, UDM) network element, and an edge application service discovery function (edge application server discovery function, EASDF) network element.

As shown in FIG. 1A, FIG. 1B, FIG. 1C, and FIG. 1D, the communication system may further include an EAS. The EAS may be deployed in a data network (data network, DN), for example, a local data network. Optionally, the EAS may be controlled by an operator or a third party. For example, an entity that provides the EAS may be a server. For example, in a mobile edge computing (mobile edge computing, MEC) scenario, an edge computing server may provide the EAS, or in other words, the EAS may be deployed on the edge computing server.

In embodiments of this application, the server that provides the EAS may also be referred to as an EAS server for short.

As shown in FIG. 1A, FIG. 1B, FIG. 1C, and FIG. 1D, the communication system may further include a first network element. The first network element may perform the communication method provided in embodiments of this application to determine/select/reselect a target edge application service. The target edge application service is an edge application service that provides a service for the terminal device.

Optionally, the first network element may be a newly defined network element. For example, the first network element may be referred to as a service routing selection (service routing function, SRF) network element or a local session management function (local SMF, L-SMF) network element. Alternatively, the first network element may be an existing network element. For example, the first network element may be an intermediate session management function (intermediate SMF, I-SMF) network element. When the terminal device is located in an area not managed by the session management network element, the intermediate session management function network element may be inserted to find a session management network element supporting a session.

For example, as shown in FIG. 1C, the first network element may be an I-SMF network element connected to the AMF network element. As shown in FIG. 1D, the first network element may be an I-SMF network element connected to the SMF network element.

In a possible architecture, the first network element may further manage a local user plane function (local UPF, L-UPF) network element and/or an EAS. The local user plane function network element is a user plane function network element connected to the edge application service (deployed in a DN). When the edge application service has been deployed in the DN close to the local user plane function network element for an application that the terminal device expects to access, or a network provides the edge application service for the terminal device, the local user plane function network element may provide a connection for the terminal device. For example, the first network element (SRF or L-SMF) in FIG. 1A and FIG. 1B or the I-SMF network element in FIG. 1C and FIG. 1D may manage the local L-UPF and the EAS.

For example, as shown in FIG. 1A, FIG. 1B, FIG. 1C, and FIG. 1D, a UPF network element connected to the EAS may be referred to as the local UPF network element in this application.

Optionally, the first network element may further perform the communication method provided in embodiments of this application to determine/select/reselect a target user plane function network element. The target user plane function network element may establish a connection with an entity that provides the target edge application service (in other words, the entity that provides the target edge application service may communicate with the target user plane function network element), and the target user plane function network element may establish a user plane channel with the terminal device. In other words, the terminal device may use, through the target user plane function network element, a service provided by the target edge application service.

The target user plane function network element may also be referred to as a local user plane function network element connected to the target edge application service.

For example, the first network element interacts with another network element (referred to as a second network element below) in the communication system. A possible implementation of the communication method provided in embodiments of this application may include: The first network element sends a fifth message to the second network element, where the fifth message is used to request latency-related information or load-related information. The second network element receives the fifth message, and sends a fourth message to the first network element. The fourth message is a response message for the fifth message, and the fourth message includes one or more of the following parameters: a latency parameter or a load parameter. The latency parameter includes a latency of transmission between at least one candidate edge application service and a user plane function network element, and the load parameter includes a load of the at least one candidate edge application service. The first network element receives the fourth message, and selects a target edge application service from the at least one candidate edge application service based on the parameter included in the fourth message.

For example, the second network element may be a network element like a user plane function network element, an application function network element, or a network exposure function network element in the communication system.

It should be noted that FIG. 1A, FIG. 1B, FIG. 1C, and FIG. 1D show merely some examples of network elements or entities in the communication system. The communication system may further include some network elements or entities that are not shown in FIG. 1A, FIG. 1B, FIG. 1C, and FIG. 1D. This is not specifically limited in embodiments of this application.

As shown in FIG. 1A, the terminal device accesses a network through an AN device, and the terminal device communicates with the AMF network element via an N1 interface (N1 for short). The AN device communicates with the AMF network element via an N2 interface (N2 for short). The AN device communicates with the UPF network element via an N3 interface (N3 for short). Different UPF network elements communicate with each other via an N9 interface (N9 for short). The entity that provides the EAS may communicate with the UPF network element via an N6 interface (N6 for short). The SMF network element may communicate with the first network element via an Nx interface. The first network element may communicate with the UPF network element via an Ny interface.

In a possible implementation, the first network element in FIG. 1A, FIG. 1B, FIG. 1C, and FIG. 1D may determine/select/reselect a target EAS from the EAS based on an N6 latency between the EAS and the UPF network element and/or a load of the EAS. Optionally, the first network element may further determine/select/reselect a UPF network element connected to the target EAS.

As shown in FIG. 1B, the terminal device accesses a network through an AN device, and the terminal device communicates with the AMF network element via N1. The AN device communicates with the AMF network element via N2. The AN device communicates with a ULCL/branchpoint (branchpoint, BP) UPF network element via N3. A PDU session anchor (PDU session anchor, PSA) UPF network element communicates with the DN via N6. Different UPF network elements communicate with each other via N9. The entity that provides the EAS may communicate with the UPF network element via N6. The SMF network element may communicate with the first network element via an Nx interface. The first network element may communicate with the UPF network element via an Ny interface.

In a possible implementation, the first network element in FIG. 1A, FIG. 1B, FIG. 1C, and FIG. 1D may determine/select/reselect a target EAS based on an N6 latency between the EAS and the UPF network element and/or a load of the EAS. Optionally, the first network element may further determine/select/reselect a UPF network element connected to the target EAS.

In a possible implementation, the first network element in FIG. 1A, FIG. 1B, FIG. 1C, and FIG. 1D may determine/select/reselect a target UPF network element based on an N6 latency between the EAS and the UPF network element and/or a load of the EAS. Optionally, the first network element may further determine/select/reselect an EAS connected to the target UPF.

As shown in FIG. 1C, the terminal device accesses a network through an AN device, and the terminal device communicates with the AMF network element via N1. The AN device communicates with the AMF network element via N2. The AN device communicates with a UL CL UPF network element or a BP UPF network element via N3. The AMF network element communicates with an I-SMF network element via an N11 interface (N11 for short). The SMF network element communicates with a PSA1 UPF network element via an N4 interface (N4 for short). The PSA1 UPF network element communicates with the DN via N6. The I-SMF network element may communicate with the SMF network element via an N16a interface (N16a for short). The I-SMF network element may communicate with the UL CL UPF network element and a PAS2 UPF network element via N4. Different UPF network elements communicate with each other via N9. The entity that provides the EAS may communicate with the UPF network element via N6.

In a possible implementation, the AMF network element in FIG. 1C may select an I-SMF network element (namely, the I-SMF network element in FIG. 1C) in a session establishment or modification process. Then, the I-SMF network element may determine/select/reselect an EAS based on an N6 latency between the EAS and the UPF network element and/or a load of the EAS. Optionally, the I-SMF network element may further determine/select/reselect a UPF network element connected to the target EAS.

In a possible implementation, the I-SMF network element in FIG. 1C may determine/select/reselect a target UPF network element based on an N6 latency between the EAS and the UPF network element and/or a load of the EAS. Optionally, the I-SMF may further determine/select/reselect an EAS connected to the target UPF.

As shown in FIG. 1D, the terminal device accesses a network through an AN device, and the terminal device communicates with the AMF network element via N1. The AN device communicates with the AMF network element via N2. The AN device communicates with a ULCL UPF network element or a BP UPF network element via N3. The AMF network element communicates with the SMF network element via N11. The SMF network element communicates with a PAS1 UPF network element and the UL CL UPF network element via N4. The PSA1 UPF network element communicates with the DN via N6. Different UPF network elements communicate with each other via an N9 interface (N9 for short). The I-SMF network element may communicate with the SMF network element via N16a or Nx. The I-SMF network element may communicate with a PSA2 UPF network element via N4 or Ny. The entity that provides the EAS may communicate with the UPF network element via N6.

In a possible implementation, the AMF network element in FIG. 1D selects an SMF network element in a session establishment or modification process, and the SMF network element further selects an I-SMF network element (namely, the I-SMF network element in FIG. 1D). Then, the I-SMF network element may determine/select/reselect an EAS based on an N6 latency between the EAS and the UPF network element and/or a load of the EAS. Optionally, the I-SMF network element may further determine/select/reselect a UPF network element connected to the target EAS.

In a possible implementation, the I-SMF network element in FIG. 1D may determine/select/reselect a target UPF network element based on an N6 latency between the EAS and the UPF network element and/or a load of the EAS. Optionally, the I-SMF may further determine/select/reselect an EAS connected to the target UPF.

In addition, the core network control plane network elements shown in FIG. 1A, FIG. 1B, FIG. 1C, and FIG. 1D interact with each other via a service-based interface. For example, a service-based interface provided by the AMF network element externally is Namf, a service-based interface provided by the SMF network element externally is Nsmf, a service-based interface provided by the NEF network element externally is Nnef, a service-based interface provided by the NRF network element externally is Nnrf, a service-based interface provided by the PCF network element externally is Npcf, a service-based interface provided by the UDM network element externally is Nudm, a service-based interface provided by the AF network element externally is Naf, and a service-based interface provided by the EASDF network element externally is Neasdf. For related function descriptions and interface descriptions, refer to an existing standard. Details are not described herein.

All or some functions of the network element or the device in embodiments of this application may alternatively be implemented by using a software function running on hardware, or may be implemented by using an instantiated virtualization function on a platform (for example, a cloud platform). Alternatively, the network element in embodiments of this application may be a logical node, a logical module, or software that can implement all or some functions of the network element.

An access network device may also be referred to as an AN entity, an access node, or the like, and forms a part of a communication system, to help a terminal device access a network. In a possible scenario, the access network device may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a wireless fidelity (wireless fidelity, Wi-Fi) system, or the like. The access network device may be a macro base station, a micro base station, an indoor base station, a relay node, a donor node, or a radio controller in a cloud-radio access network (cloud-radio access network, C-RAN) scenario. Optionally, the access network device may alternatively be a server, a wearable device, a vehicle, a vehicle-mounted device, or the like. For example, an access network device in a V2X technology may be a road side unit (road side unit, RSU).

In another possible scenario, a plurality of access network devices coordinate to assist the terminal device in implementing access, and different access network devices each implement a part of functions of a base station. For example, the access network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an open radio access network (open RAN, O-RAN), the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in embodiments of this application. Any unit in the CU (or the CU-CP or the CU-UP), the DU, and the RU in embodiments of this application may be implemented by using a software module, a hardware module, or a combination of the software module and the hardware module.

The terminal device may also be referred to as a terminal (terminal), user equipment (user equipment, UE), a mobile station, a mobile terminal, or the like. The terminal device may be widely used in various scenarios, for example, D2D, V2X communication, machine-type communication (machine-type communication, MTC), internet of things, virtual reality (virtual reality, VR), augmented reality (augmented reality, AR), industrial control (industrial control), self-driving (self-driving), telemedicine (remote medical), smart grid (smart grid), smart furniture, smart office, smart wearable, smart transportation, or smart city. The terminal device may be a mobile phone, a tablet computer, a computer with wireless sending and receiving functions, a wearable device, a vehicle, an uncrewed aerial vehicle, a helicopter, an airplane, a ship, a robot, a robot arm, a smart home device, or the like. A device form of the terminal device is not limited in embodiments of this application.

The following describes the communication method provided in embodiments of this application with reference to the architectures of the communication systems shown in FIG. 1A, FIG. 1B, FIG. 1C, and FIG. 1D.

It should be noted that in the following embodiments of this application, a name of each network element, a name of a message exchanged between network elements, a name of each parameter, a name of each piece of information, or the like is merely an example, and may be another name in another embodiment. This is not specifically limited in the method provided in this application.

It may be understood that in embodiments of this application, each network element or entity may perform some or all steps in embodiments of this application, and these steps or operations are merely examples. In embodiments of this application, another operation or various operation variants may be alternatively performed. In addition, the steps may be performed in a sequence different from a sequence presented in embodiments of this application, and not all the operations in embodiments of this application may be performed.

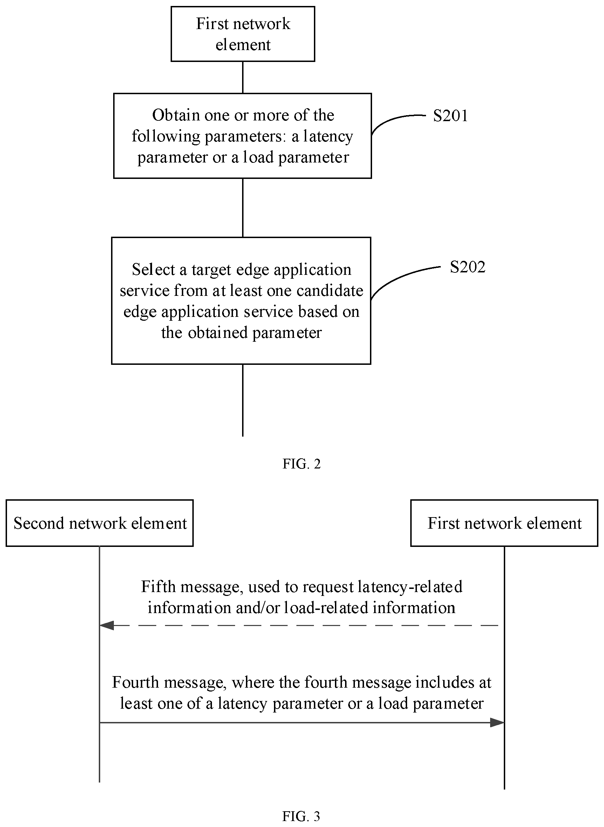

Refer to FIG. 2. A communication method provided in an embodiment of this application includes steps S201 and S202.

S201: A first network element obtains one or more of the following parameters: a latency parameter or a load parameter, where the latency parameter includes a latency of transmission between at least one edge application service and a user plane function network element, and the load parameter includes a load of the at least one edge application service.

S202: The first network element selects (or determines, or reselects in some scenarios) a target edge application service from the at least one edge application service based on the obtained parameter.

In this embodiment of this application, the target edge application service may provide an application service for a terminal device. After the first network element selects the target edge application service, an entity that provides the target edge application service may establish a connection with the user plane function network element (in other words, may communicate with the user plane function network element), to provide the application service for the terminal device based on a user plane channel between the user plane function network element and the terminal device.

In this embodiment of this application, the first network element may determine one or more target edge application services.

An application scenario of S201 and S202 is not limited in this embodiment of this application. For example, S201 and S202 may be applied to a session establishment scenario. In this scenario, the first network element may select the target edge application service based on a session that the terminal device requests to establish. For another example, S201 and S202 may be applied to a scenario in which a session has been established. In this scenario, the first network element may reselect the target edge application service for the terminal device.

Based on the communication method provided in this embodiment of this application, the edge application service may be selected for the terminal device based on the latency parameter and/or the load parameter related to the edge application service. Therefore, compared with a current solution in which an edge application service is selected by considering only an access location of a terminal device, the solution for selecting an edge application service provided in this application is more flexible. When the access location of the terminal device does not change significantly, adjustment may be performed based on the latency parameter and/or the load parameter, to select an appropriate edge application service for the terminal device. In addition, in the solution for selecting an edge application service provided in this embodiment of this application, a factor such as a network status or an application status is considered, and the target edge application service with better performance may be selected. For example, when the network status factor is considered, the target edge application service may be selected based on the latency parameter related to the edge application service. This can avoid that a target edge application service with an excessively high transmission latency is selected and user experience is affected. When the application status factor is considered, the target edge application service may be selected based on the load parameter related to the edge application service, to avoid selecting an edge application service that cannot provide a service in a timely manner due to excessively large load pressure.

First, S201 is described in detail.

For the at least one edge application service related to the latency parameter or the load parameter, because the first network element selects the target edge application service from the at least one edge application service, the at least one edge application service may be understood as a candidate (or an alternative) of the target edge application service. For ease of understanding the technical solutions in embodiments of this application, the at least one edge application service is referred to as a candidate edge application service in the following embodiments.

There may be one or more candidate edge application services. If there are a plurality of candidate edge application services, the latency parameter includes a latency of transmission between each of the plurality of candidate edge application services and the user plane function network element. The load parameter includes a load of each of the plurality of candidate edge application services.

In a possible implementation, the user plane function network element in this embodiment of this application may be a local user plane function network element. For details, refer to the foregoing descriptions of the communication system to which embodiments of this application are applicable. Details are not described herein.

In a possible scenario, the latency of transmission between the candidate edge application service and the user plane function network element may be a latency of transmission between an entity providing the candidate edge application service and the user plane function network element. For example, the latency may be a latency of transmission between a server providing the candidate edge application service and the user plane function network element.

For the latency of transmission between the candidate edge application service and the user plane function network element that is included in the latency parameter, there may be one or more related user plane function network elements.

When there is one user plane function network element, the user plane function network element is a target user plane function network element, in other words, the first network element may determine the user plane function network element as the target user plane function network element. The target user plane function network element may establish a connection with the target edge application service selected by the first network element, and the target user plane function network element may establish a user plane channel with the terminal device.

When there are a plurality of user plane function network elements, the plurality of user plane function network elements may be considered as a plurality of candidate user plane function network elements, and the first network element may select a target user plane function network element from the plurality of candidate user plane function network elements based on the obtained parameter. That the first network element selects the target user plane function network element from the candidate user plane function network elements is specifically described below with reference to S202, and details are not described herein.

Optionally, the latency parameter may further include one or more of the following: a latency of transmission between the user plane function network element and an access network device (which is an access network device communicating with the terminal device) or a latency of transmission between the user plane function network element and an intermediate user plane function network element. For the two latencies, there may be one or more related user plane network elements. When there are a plurality of user plane network elements, the user plane network elements may also be referred to as candidate user plane network elements. For details, refer to the foregoing descriptions.

The intermediate user plane function network element is configured to transfer information between the user plane function network element and the access network device. If the access network device cannot directly establish a tunnel with the user plane function network element, tunnel information may be transferred through the intermediate user plane function network element.

Optionally, the latency included in the latency parameter may be named based on a communication interface. For example, if the candidate edge application service communicates with the user plane function network element via an N6 interface, the latency of transmission between the candidate edge application service and the user plane function network element may also be referred to as an N6 latency. If the user plane network element communicates with the access network device via an N3 interface, the latency of transmission between the user plane network element and the access network device may also be referred to as an N3 latency. If the user plane network element communicates with the intermediate network element via an N9 interface, the latency of transmission between the user plane network element and the intermediate network element may also be referred to as an N9 latency.

The foregoing describes the latency parameter and the load parameter. A specific implementation of obtaining the latency parameter or the load parameter by the first network element is not limited in embodiments of this application. The following describes several possible obtaining manners provided in embodiments of this application.

Manner 1: As shown in FIG. 3, the first network element may receive a fourth message from another network element (referred to as a second network element below). The fourth message includes at least one of the latency parameter or the load parameter.

For example, the second network element may be a network element like a user plane function network element, a network capability exposure function network element, or an application function network element.

Optionally, as shown in FIG. 3, a fifth message sent by the first network element to the second network element may trigger the second network element to send the fourth message to the first network element. In other words, the fourth message is a response message for the fifth message. The fifth message is used to request latency-related information and/or load-related information.

If the fifth message triggers sending of the fourth message, in a possible case, each time the first network element sends the fifth message to the second network element, the second network element is triggered to send the fourth message to the first network element once.

In another possible case, when the first network element sends the fifth message to the second network element once, the second network element is triggered to send the fourth message to the first network element for a plurality of times. For example, when the first network element sends the fifth message to the second network element, the second network element may be triggered to periodically send the fourth message to the first network element.

If the fifth message triggers sending of the fourth message, in a possible implementation, the fifth message may carry information about the candidate edge application service and/or information about the user plane function network element. In this implementation, the second network element may determine the candidate edge application service and/or the user plane function network element based on the information carried in the fifth message, to send the corresponding latency parameter and/or load parameter to the first network element.

For example, the fifth message may carry an internet protocol (internet protocol, IP) address or a port (port) number of the candidate edge application service, and an IP address or a port number of the user plane function network element.

In another possible implementation, the second network element may use the fourth message to carry locally stored related information about the edge application service and/or the user plane function network element, and send the fourth message to the first network element. After receiving the fourth message, the first network element may determine at least one of the latency parameter or the load parameter from the information carried in the fourth message.

For example, the fourth message may include at least one piece of information such as a fully qualified domain name (fully qualified domain name, FQDN), an application (application, App) serial number (identity, ID), an IP address, a data network access identifier (data network access identifier, DNAI), a data network name (data network name, DNN), a load value, and a value of a latency of transmission with the user plane function network element that correspond to each of a plurality of edge application services.

In a possible scenario of Manner 1, if the second network element is the user plane function network element, after the second network element receives the fifth message, the second network element may be triggered to request a related network element to measure the latency parameter or the load parameter. For example, the second network element may request the candidate edge application service to measure a latency of transmission between the candidate edge application service and the second network element or a load of the candidate edge application service. For another example, the second network element may request the access network device to measure a latency of transmission between the access network device and the second network element. For another example, the second network element may request the intermediate user plane function network element to measure a latency of transmission between the intermediate user plane function network element and the second network element.

A specific implementation of requesting, by the second network element, the related network element to measure the latency parameter or the load parameter is not limited in this embodiment of this application. For example, the second network element may request, by using a transport layer message, the candidate edge application service to measure the latency of transmission between the candidate edge application service and the second network element or the load of the candidate edge application service. For another example, the second network element may request, in a QoS monitoring (QoS monitoring) manner, the access network device to measure the latency of transmission between the access network device and the second network element. For another example, the second network element may request, by using a general packet radio service (general packet radio service, GPRS) tunneling protocol for the user plane (GPRS tunneling protocol for the user plane, GTP-U) message, the intermediate user plane function network element to measure the latency of transmission between the intermediate user plane function network element and the second network element.

In another possible scenario, if the second network element is the network capability exposure function network element, the at least one of the latency parameter or the load parameter sent by the second network element to the first network element may be provided by the application function network element for the second network element.

In another possible scenario, if the second network element is the application function network element, the at least one of the latency parameter or the load parameter sent by the second network element to the first network element may be provided by an operator or a third party for the second network element.

Manner 2: The first network element may be preconfigured with related information about the edge application service and/or the user plane function network element. After determining the candidate edge application service and the user plane function network element, the first network element determines at least one of the latency parameter or the load parameter from the locally configured related information. For example, a staff member may periodically write, into the first network element, related information about an edge application service and/or a user plane function network element within coverage of the first network element.

In a possible example, in the foregoing manner, the related information about the edge application service and/or the user plane function network element that is obtained by the first network element may be referred to as edge application service deployment information (EAS deployment information).

The following describes S202 in detail by using an example in which there is one user plane function network element related to the latency parameter (that is, the user plane function network element is the target user plane function network element).

In S202, when there are a plurality of candidate edge application services, the first network element may select one or more candidate edge application services from the plurality of candidate edge application services as target edge application services based on the obtained parameter.

This embodiment of this application does not limit a specific implementation of selecting, by the first network element, the target edge application service from the plurality of candidate edge application services.

For example, assuming that the first network element obtains the latency parameter, the first network element may select, from the plurality of candidate edge application services, a candidate edge application service having a lowest transmission latency with the user plane function network element as the target candidate edge application service.

For another example, assuming that the first network element obtains the load parameter, the first network element may select, from the plurality of candidate edge application services, a candidate edge application service having a lowest load as the target candidate edge application service.

For another example, assuming that the first network element obtains the latency parameter and the load parameter, the first network element may select the target edge application service from the plurality of candidate edge application services in accordance with the latency parameter and the load parameter. For example, the first network element may set a coefficient (or a weight) for each of a latency value included in the latency parameter and a load value included in the load parameter, to select the target candidate edge application service based on respective weighting results of the plurality of candidate edge application services. For example, a candidate edge application service with a smallest weighting result may be selected as the target candidate edge application service.

Optionally, the first network element may further obtain at least one of a latency requirement or a load requirement. The latency requirement may include a latency requirement for transmission between the edge application service and the user plane function network element, or a latency requirement for transmission (which may also be briefly referred to as end-to-end (the end-to-end, E2E) transmission) between the edge application service and the terminal device. The load requirement is a load requirement for the edge application service.

For example, the latency requirement or the load requirement may be represented by using information in different forms. For example, the latency requirement for transmission between the edge application service and the terminal device may be represented by using an allowed/preferred E2E latency field or a max E2E latency field. For another example, the latency requirement for transmission between the edge application service and the user plane function network element may be represented by using an allowed/preferred N6 latency field or a max N6 latency field. For another example, the load requirement for the edge application service may be represented by using an allowed/preferred EAS load field or a max EAS load field.

Further, the first network element may select the target edge application service from the plurality of candidate edge application services with reference to the obtained parameter and requirement. Based on different obtained parameters and requirements, specific implementations of selecting, by the first network element, the target edge application service from the plurality of candidate edge application services may also be different. The following provides detailed descriptions.

When the first network element obtains the latency requirement, the first network element may select the target edge application service from the plurality of candidate edge application services based on the obtained latency parameter. In this case, the target edge application service satisfies the latency requirement. Satisfying the latency requirement may be that a latency corresponding to a time sequence requirement does not exceed the latency requirement, or that a latency corresponding to the latency requirement is less than the latency requirement.

Optionally, if the latency requirement obtained by the first network element includes the latency requirement for transmission between the edge application service and the user plane function network element, the first network element may determine, based on the obtained latency of transmission between the candidate edge application service and the user plane network element, whether the candidate edge application service satisfies the latency requirement.

For example, it is assumed that the latency requirement that is obtained by the first network element and that is for transmission between the edge application service and the user plane function network element is 5 ms. Latencies of transmission between three candidate edge application services (which are respectively a candidate edge application service 1, a candidate edge application service 2, and a candidate edge application service 3) and the user plane function network element that are obtained by the first network element are respectively 4 ms, 6 ms, and 7 ms. Only the candidate edge application service 1 satisfies the latency requirement. Therefore, the first network element may select the candidate edge application service 1 as the target edge application service.

Optionally, if the latency requirement obtained by the first network element includes the latency requirement for transmission between the edge application service and the terminal device, the first network element may determine, based on a sum of at least one of the obtained latency of transmission between the user plane network element and the access network device or the obtained latency of transmission between the user plane function network element and the intermediate user plane function network element and the latency of transmission between the candidate edge application service and the user plane network element, whether the candidate edge application service satisfies the latency requirement. Alternatively, the first network element may determine, based on only the latency of transmission between the candidate edge application service and the user plane network element, whether the candidate edge application service satisfies the latency requirement.

For example, it is assumed that the latency requirement that is obtained by the first network element and that is for transmission between the edge application service and the terminal device is 10 time units. Latencies of transmission between three candidate edge application services (which are respectively a candidate edge application service 1, a candidate edge application service 2, and a candidate edge application service 3) and the user plane function network element that are obtained by the first network element are respectively 4 ms, 6 ms, and 7 ms. In addition, the first network element further learns that the latency of transmission between the user plane function network element and the access network device is 3 ms, and the latency of transmission between the user plane function network element and the intermediate user plane function network element is 2 ms. In this case, the first network element determines that a total latency corresponding to the candidate edge application service 1 is 4+3+2=9 ms, a total latency corresponding to the candidate edge application service 2 is 6+3+2=11 ms, and a total latency corresponding to the candidate edge application service 3 is 7+3+2=12 ms. Only the candidate edge application service 1 satisfies the latency requirement. Therefore, the first network element may select the candidate edge application service 1 as the target edge application service.

Optionally, if a plurality of candidate edge application services satisfy the latency requirement, the first network element may select, from the plurality of candidate edge application services, a candidate edge application service having a lowest latency corresponding to the latency requirement as the target edge application service.

When the first network element obtains the load requirement, the first network element may select the target edge application service from the plurality of candidate edge application services based on the obtained load parameter. In this case, the target edge application service satisfies the load requirement.

For example, it is assumed that the load requirement that is obtained by the first network element and that is for the edge application service is 10%. Loads of three candidate edge application services (which are respectively a candidate edge application service 1, a candidate edge application service 2, and a candidate edge application service 3) that are obtained by the first network element are respectively 9%, 11%, and 12%. Only the candidate edge application service 1 satisfies the latency requirement. Therefore, the first network element may select the candidate edge application service 1 as the target edge application service.

Optionally, if a plurality of candidate edge application services satisfy the load requirement, the first network element may select, from the plurality of candidate edge application services, a candidate edge application service having a lowest load as the target edge application service.

When the first network element obtains the latency requirement and the load requirement, the first network element may select the target edge application service from the plurality of candidate edge application services in accordance with the obtained latency parameter and load parameter. In this case, the target edge application service satisfies the load requirement and the latency requirement.

For example, it is assumed that the latency requirement that is obtained by the first network element and that is for transmission between the edge application service and the user plane function network element is 5, and the load requirement for the edge application service is 10%. Latencies of transmission between three candidate edge application services (which are respectively a candidate edge application service 1, a candidate edge application service 2, and a candidate edge application service 3) and the user plane function network element that are obtained by the first network element are respectively 3%, 4%, and 6%, and loads of the three candidate edge application services are respectively 11%, 9%, and 12%. Only the candidate edge application service 2 satisfies both the latency requirement and the load requirement. In this case, the first network element may select the candidate edge application service 2 as the target edge application service.

Optionally, if a plurality of candidate edge application services satisfy the load requirement and the latency requirement, the first network element may select, from the plurality of candidate edge application services, a candidate edge application service having a lowest load or a candidate edge application service having a lowest latency corresponding to the latency requirement as the target edge application service. Alternatively, the first network element may set a coefficient for each of a latency value included in the latency parameter and a load value included in the load parameter, to select the target candidate edge application service based on respective weighting results of the plurality of candidate edge application services.

The foregoing describes a case that the first network element selects the target edge application service from the plurality of candidate edge application services. The following describes a case that there is one candidate edge application service.

In S202, when there is one candidate edge application service, the first network element may determine, based on the obtained parameter, whether the candidate edge application service can be used as the target edge application service.

For example, if a load included in the latency parameter is excessively high, the first network element determines that the candidate edge application service cannot be used as the target edge application service.

Optionally, if the first network element further obtains a latency requirement and/or a load requirement, the first network element may determine, based on whether the candidate edge application service satisfies the latency requirement and/or the load requirement, whether the candidate edge application service can be used as the target edge application service. For details, refer to the foregoing description of selecting, by the first network element, the target candidate edge application service from the plurality of candidate edge application services.

In addition, when there is one candidate edge application service, if the first network element determines that the candidate edge application service cannot be used as the target edge application service, the first network element may determine that the target edge application service fails to be selected. Optionally, if the first network element selects the target edge application service in a session establishment scenario, the first network element may send, to a session management network element, indication information indicating that the target edge application service fails to be selected. For example, the indication information indicating that the target edge application service fails to be selected may be carried in a response message of the first network element for session establishment.

The foregoing describes how to determine the target edge application service based on the latency requirement and/or the load requirement. For the latency requirement and/or the load requirement, how the first network element obtains the latency requirement and/or the load requirement is not specifically limited in embodiments of this application. The following describes several possible implementations provided in embodiments of this application.

In a possible implementation, the session management function network element sends a first message to the first network element. Correspondingly, the first network element receives the first message from the session management function network element. The first message is used to request to establish a session, and the first message includes at least one of the latency requirement or the load requirement.

For example, the first message may be a protocol data unit (protocol data unit, PDU) session establishment request (PDU session create) message. In other words, in a session establishment scenario, the session establishment request message of the session management network element may trigger the first network element to select the target edge application service.

In this implementation, the at least one of the latency requirement or the load requirement obtained by the session management function network element may be sent by the application function network element to the session management function network element.

Alternatively, the session management function network element may determine the at least one of the latency requirement or the load requirement from obtained subscription data of the terminal device. For example, the session management function network element may obtain the subscription data of the terminal device from a unified data management network element.

Alternatively, the session management function network element is locally configured with the at least one of the latency requirement or the load requirement.

Optionally, there may be a correspondence between a latency requirement or a load requirement and an application. The session management network element may determine, based on an application service requested by the terminal device, a latency requirement or a load requirement corresponding to an application, and send, to the first network element, the latency requirement or the load requirement corresponding to the application as a latency requirement or a load requirement used to determine the target edge application service.

In a possible case of this implementation, the latency requirement obtained by the session management function network element includes a latency requirement for transmission between the candidate edge application service and the terminal device, and the latency requirement sent by the session management function network element to the first network element includes a latency requirement for transmission between the candidate edge application service and the user plane function network element. In this case, the session management function network element may determine, based on the latency requirement for transmission between the candidate edge application service and the terminal device, the latency requirement for transmission between the candidate edge application service and the user plane function network element.

For example, the session management function network element may determine a latency of transmission between the terminal device and the user plane function network element, for example, a packet delay budget (packet delay budget, PDB) latency between the terminal device and the user plane function network element, and subtract a value of the PDB latency between the terminal device and the user plane function network element from a value of the latency requirement of transmission between the candidate edge application service and the terminal device, to obtain a value of the latency requirement for transmission between the candidate edge application service and the user plane function network element.

In another possible implementation, the application function network element sends the at least one of the latency requirement or the load requirement to the first network element. Correspondingly, the first network element receives the at least one of the latency requirement or the load requirement from the application function network element.

In another possible implementation, the first network element is locally configured with the at least one of the latency requirement or the load requirement.

Optionally, after the first network element selects the target edge application service, a channel may be established between the target edge application service and the user plane function network element. Data may be transmitted through the established channel between an entity that provides the target edge application service and the user plane function network element.

For example, an N6 channel may be established between the target edge application service and the user plane function network element.

Optionally, after the first network element selects the target edge application service, the session management network element may establish a user plane channel between the user plane function network element and the terminal device, so that the terminal device can use the target edge application service.

Optionally, the first network element may send information about the target edge application service, for example, an IP address and a port number of the target edge application service, to the session management function network element.

For example, if the first network element selects the target edge application service in a session establishment scenario, the first network element may include the information about the target edge application service in a session establishment response message to be sent to the session management function network element. In a possible case of this example, if the session management network element sends the at least one of the latency requirement or the load requirement to the first network element by using the first message, the first network element may include the information about the target edge application service in a response message for the first message, for example, a PDU session establishment response (PDU session create response) message.

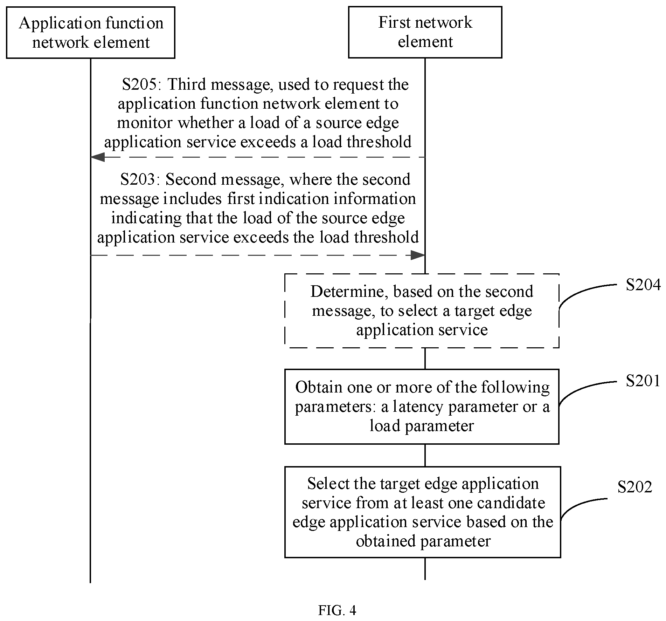

Optionally, as shown in FIG. 4, before S201, the communication method may further include the following steps.

S203: The application function network element sends a second message to the first network element, and correspondingly, the first network element receives the second message from the application function network element. The second message includes first indication information, and the first indication information indicates that a load of a source edge application service exceeds a load threshold.

In S203, the source edge application service is an edge application service that is providing a service for the terminal device currently (when S203 occurs). In other words, before S203, the source edge application service has accessed a core network through the user plane function network element, and the terminal device may use the source edge application service through a user plane channel between the terminal device and the user plane function network element.

Optionally, the second message may include information about the source edge application service. For example, information such as an IP address and a port number of the source edge application service may be included.

S204: The first network element determines, based on the second message, to select the target edge application service.

The first network element determines, based on the second message, that the target edge application service needs to be reselected. Further, the first network element may select the target edge application service based on S201 and S202. In other words, the second message may trigger the first network element to select the target edge application service to replace the source edge application service. A transmission path from the terminal device to the user plane function network element and from the user plane function network element to the source edge application service before S203 is modified to a transmission path from the terminal device to the user plane function network element and from the user plane function network element to the target edge application service after S202.

Optionally, before S203, the communication method may further include the following step.

S205: The first network element sends a third message to the application function network element, and correspondingly, the application function network element receives the third message from the first network element, where the third message is used to request the application function network element to monitor whether the load of the source edge application service exceeds the load threshold.

Further, after receiving the third message, the application function network element starts to monitor whether the load of the source edge application service exceeds the load threshold, and sends the second message to the first network element if the source edge application service exceeds the load threshold.

Optionally, in S205, the third message may include information about the source edge application service, for example, an IP address and a port number of the source edge application service. The third message may further include information about the load threshold corresponding to the source edge application service, for example, information indicating the load threshold corresponding to the source edge application service.

Optionally, S203 and S204 may occur in a scenario after session establishment is completed.

Selection of the candidate edge application service is not limited in this embodiment of this application. For example, if the first network element manages the edge application service, the candidate edge application service may be an edge application service within a management range of the first network element.

For another example, in a session establishment scenario, the first network element may determine the candidate edge application service based on one or more pieces of information that are related to the edge application service and that are provided when the terminal device requests a service. For example, the first network element may pre-obtain an association relationship between the information about the edge application service (for example, an IP address of the edge application service) and one or more of the following information: an App ID, an FQDN, a DNAI, a DNN, or slice information. When the terminal device requests a network to provide a service, the first network element may obtain one or more of the following information provided by the terminal device: an App ID, an FQDN, a DNAI, a DNN, a slice, or the like. The first network element may determine, based on the information provided by the terminal device and the pre-obtained association relationship, one or more candidate edge application services that can provide an application service for the terminal device. In a possible example, the association relationship that is between the information about the edge application service and one or more pieces of information and that is obtained by the first network element may be referred to as edge application service deployment information. Optionally, the edge application service deployment information may be provided by the application function network element or the network capability exposure function network element for the first network element.

For another example, in a scenario in which a session has been established, the first network element may determine, as the candidate EAS based on the EAS deployment information, an EAS corresponding to a same first parameter as the source EAS. The first parameter may include one or more of the following parameters: an FQDN, a DNAI, an App ID, or a DNN.

In the foregoing embodiment, the first network element may determine the target edge application service based on the obtained parameter. In addition, in this embodiment of this application, the first network element may further determine (or select, or reselect in some scenarios) the target user plane function network element.

Optionally, the first network element may select one candidate user plane function network element from a plurality of candidate user plane function network elements as the target user plane function network element. Alternatively, the first network element may determine whether a candidate user plane function network element can be used as the target user plane function network element.

Selection of the candidate user plane function network element is not limited in this embodiment of this application. For example, if the first network element manages a local user plane function network element, the candidate user plane function network element may be a local user plane function network element within a management range of the first network element. For another example, the first network element may determine the candidate user plane function network element based on one or more pieces of information included in the EAS deployment information.

A scenario in which the target user plane function network element is determined is not limited in this embodiment of this application. For example, the first network element may determine the target user plane function network element in a session establishment scenario. For another example, the first network element may reselect the target user plane function network element after session establishment is completed.

A specific implementation of determining the target user plane function network element by the first network element is not limited in this embodiment of this application. For example, the first network element may determine the target user plane function network element based on DNAI information in the EAS deployment information.

In a possible implementation, after the first network element determines the target user plane function network element, the first network element may further determine the target edge application service from the candidate edge application service. For example, the first network element may determine the target edge application service based on the latency parameter and/or the load parameter. The latency parameter may include a latency of transmission between the target user plane function network element and the candidate edge application service. The load parameter includes the load of the candidate edge application service.

For example, it is assumed that the first network element selects an L-UPF 1 as the target UPF network element in a session establishment process. Two EASs (an EAS 1 and an EAS 2) that back up each other are deployed near the L-UPF 1. The first network element may further select the target EAS from the EAS 1 and the EAS 2 based on a latency of transmission between the L-UPF 1 and the EAS 1 and a latency of transmission between the L-UPF 1 and the EAS 2.

In another possible implementation, the first network element may determine both the target user plane function network element and the target edge application service. The following describes in detail how the first network element determines the target user plane function network element and the target edge application service.

In this implementation, the first network element may determine the target user plane function network element and the target edge application service based on at least one of the obtained latency parameter or the obtained load parameter. The latency parameter may include a latency of transmission between the candidate user plane function network element and the candidate edge application service. Optionally, the latency parameter may further include one or more of the following: a latency of transmission between the candidate user plane function network element and the access network device, or a latency of transmission between the candidate user plane function network element and the intermediate user plane function network element.

A specific implementation of determining, by the first network element, the target user plane function network element based on the obtained parameter is not limited in this embodiment of this application.

For example, if the latency parameter includes the latency of transmission between the candidate user plane function network element and the candidate edge application service, the first network element may determine, from the obtained latency parameter, a lowest latency of transmission between a candidate user plane function network element and a candidate edge application service, determine the candidate user plane function network element corresponding to the latency as the target user plane function network element, and determine the candidate edge application service corresponding to the latency as the target edge application service.

For another example, if the latency parameter includes the latency of transmission between the candidate user plane function network element and the candidate edge application service, and one or more of the following: the latency of transmission between the candidate user plane function network element and the access network device or the latency between the candidate user plane function network element and the intermediate user plane function network element, for each candidate user plane function network element and each candidate edge application service, the first network element may determine, in accordance with a plurality of latencies included in the latency parameter, a candidate user plane function network element and a candidate edge application service corresponding to a plurality of latencies having a smallest sum value, determine the candidate user plane function network element as the target user plane function network element, and determine the candidate edge application service as the target edge application service.

In another possible implementation, after the first network element determines the target edge application service, the first network element may further select the target user plane function network element from the candidate target user plane function network element. For example, the first network element may select the target user plane function network element from the candidate user plane function network element based on the latency parameter. The latency parameter includes a latency of transmission between the target edge application service and the candidate user plane function network element.

For example, it is assumed that the first network element selects the EAS 1 as the target EAS based on the load parameter. There are two L-UPFs (an L-UPF 1 and an L-UPF 2) within a management range of the first network element. The first network element selects the target L-UPF from the L-UPF 1 and the L-UPF 2 based on a latency of transmission between the EAS 1 and the L-UPF 1 and a latency of transmission between the EAS 1 and the L-UPF 2.

Optionally, in an implementation in which the first network element determines the target user plane function network element, the first network element may further obtain the latency requirement, and determine the target user plane function network element based on the obtained latency parameter and latency requirement. In this case, the target user plane function network element satisfies the latency requirement. For details about how the first network element determines the target user plane function network element based on the latency requirement and the latency parameter, refer to the foregoing description of determining the target edge application service by the first network element based on the latency requirement and the latency parameter. Details are not described herein.

Optionally, the first network element may send information about the target user plane function network element to the session management function network element, for example, an IP address and a port number of the target user plane function network element. Further, the session management network element may establish a user plane channel between the target user plane function network element and the terminal device based on the information about the target user plane function network element.

Assuming that the terminal device is UE, the access network device is a RAN device, the session management network element is an SMF network element, the target user plane function network element is a target L-UPF, and the target edge application service is a target EAS, the following describes a possible procedure in which the first network element determines the target edge application service and the target user plane function network element in the foregoing embodiment.

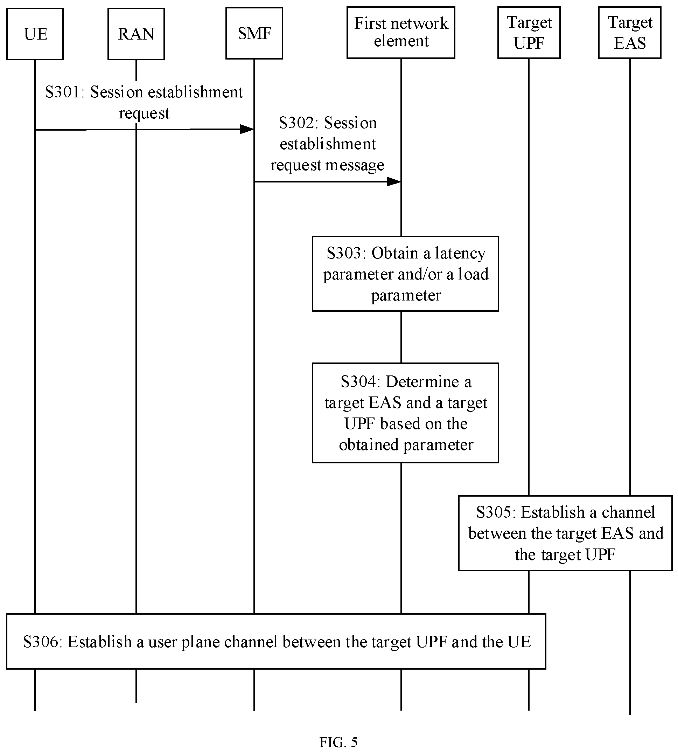

It is assumed that a target EAS and a target L-UPF are determined in a session establishment scenario. As shown in FIG. 5, a possible procedure may include the following steps.

S301: UE sends a session establishment request message to an SMF network element.

The UE may send the session establishment request message to the SMF network element to initiate session establishment.

S302: The SMF network element sends a session establishment request message to a first network element. Correspondingly, the first network element receives the session establishment request message.

The first network element may determine, based on the session establishment request message, that the target EAS and the target L-UPF need to be selected.

Optionally, in S302, the session establishment request message sent by the SMF network element to the first network element may include a latency requirement and/or a load requirement for the target EAS.

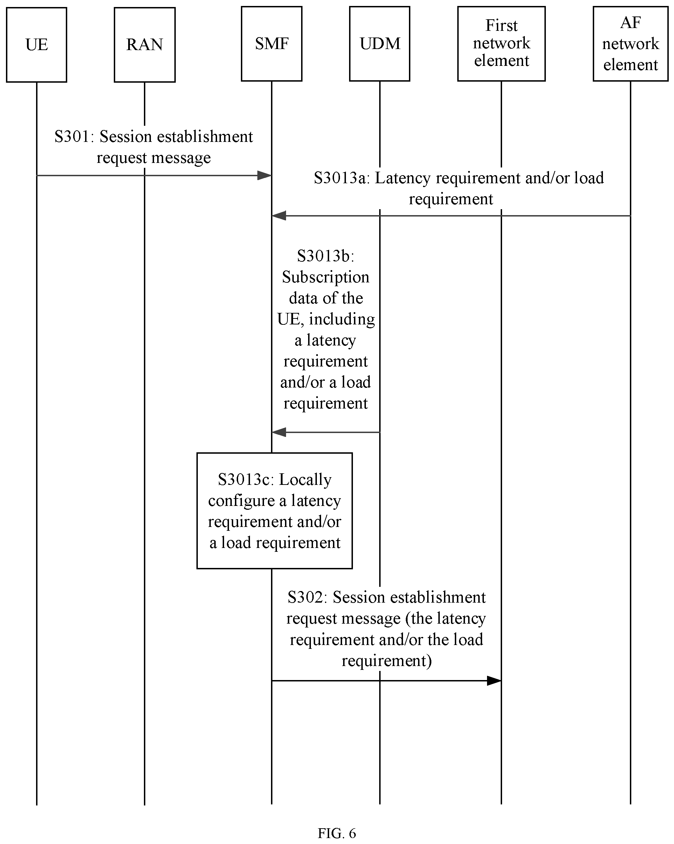

For example, as shown in FIG. 6, the SMF network element may determine the latency requirement and/or the load requirement in any manner in S3013a, S3013b, or S3013c below.

S3013a: An AF network element sends the latency requirement and/or the load requirement to the SMF network element.

S3013b: The SMF network element requests subscription data from a UDM network element. The UDM network element sends the subscription data to the SMF network element, where the subscription data includes the latency requirement and/or the load requirement.

S3013c: The SMF network element locally configures the latency requirement and/or the load requirement.

S303: The first network element obtains a latency parameter and/or a load parameter.

The following describes S303 by using an example in which the first network element obtains the latency parameter and the load parameter.

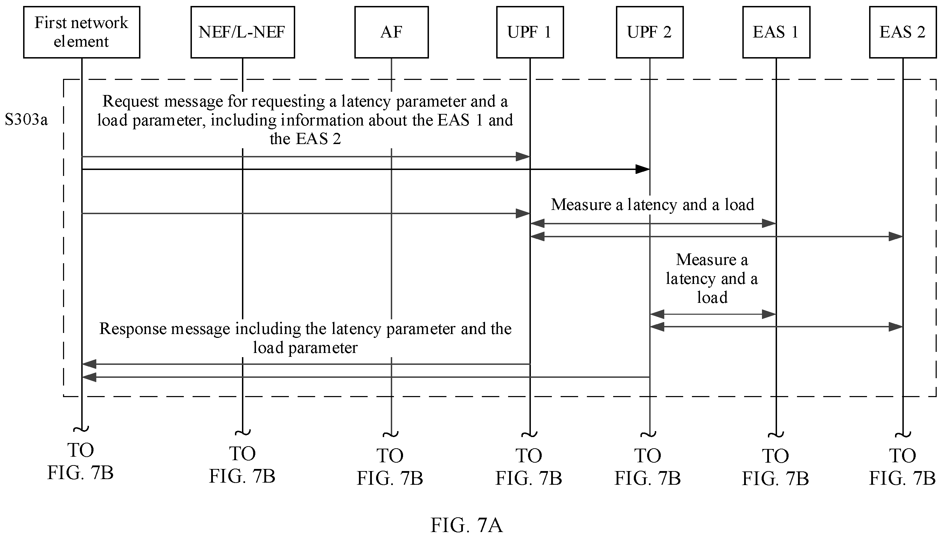

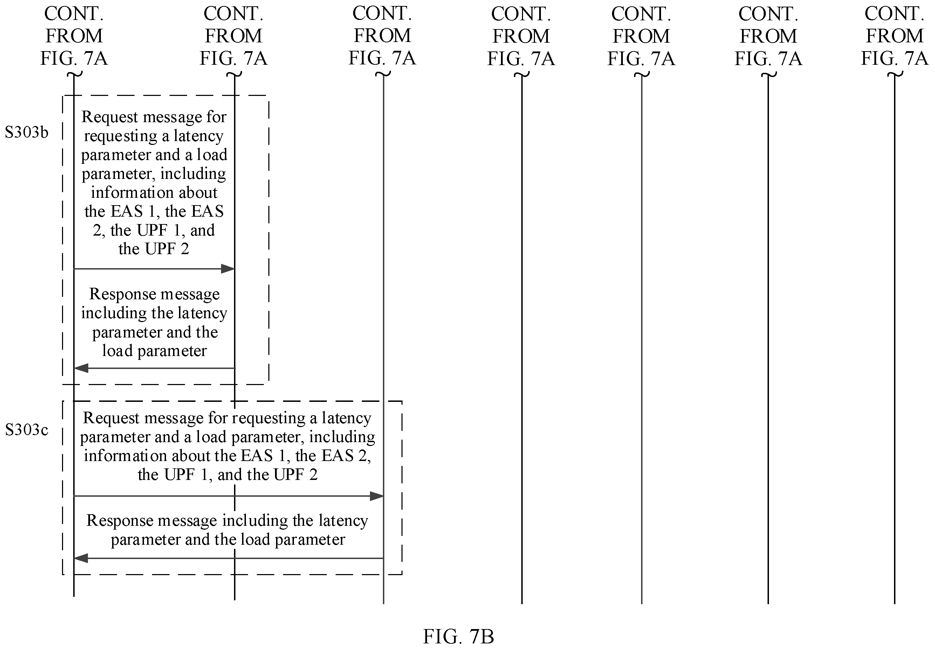

For example, the latency parameter includes a latency of transmission between a candidate EAS and a candidate UPF. It is assumed that candidate UPF network elements include a UPF 1 and a UPF 2, and candidate EASs include an EAS 1 and an EAS 2. As shown in FIG. 7A and FIG. 7B, the first network element may obtain the latency parameter and the load parameter in any manner in S303a, S303b, or S303c below.

S303a: The first network element sends, to each candidate UPF network element, a request message for requesting a latency parameter and a load parameter. The request message for requesting the latency parameter and the load parameter may include information about the candidate EAS. After receiving the request message, the candidate UPF network element requests, by using a transport layer message, each candidate EAS to measure a latency and a load. After receiving a measurement request sent by the candidate UPF network element, the candidate EAS feeds back a response message to the candidate UPF network element. The candidate UPF network element may determine a latency of transmission between the candidate UPF network element and the candidate EAS and a load of the candidate EAS based on the response message sent by the candidate EAS. Further, the candidate UPF network element sends a response message including the latency parameter and the load parameter to the first network element.

S303b: The first network element sends, to an NEF network element or a local NEF network element (L-NEF network element), a request message for requesting a latency parameter and a load parameter. The request message for requesting the latency parameter and the load parameter may include information about the candidate EAS and information about the candidate UPF network element. After receiving the request message, the NEF network element sends a response message including the latency parameter and the load parameter to the first network element. The local NEF network element may be deployed at a network edge.

S303c: The first network element requests the AF network element to send a request message for requesting a latency parameter and a load parameter. The request message for requesting the latency parameter and the load parameter may include information about the candidate EAS and information about the candidate UPF network element. After receiving the request message, the AF network element sends a response message including the latency parameter and the load parameter to the first network element.

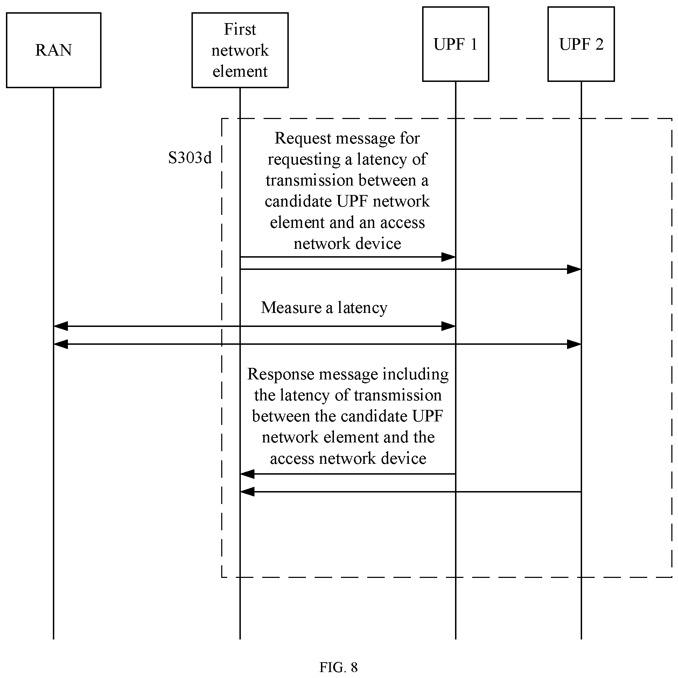

Optionally, if the latency parameter further includes a latency of transmission between the candidate UPF network element and an access network device, assuming that candidate UPF network elements include a UPF 1 and a UPF 2, as shown in FIG. 8, the first network element may obtain the latency of transmission between the candidate UPF network element and the access network device in a manner shown in S303d.

S303d: The first network element sends, to each candidate UPF network element, a request message for requesting a latency of transmission between the candidate UPF network element and the access network device. After receiving the request message, the candidate UPF network element requests, in a QoS monitoring manner, the access network device to measure a latency. After receiving a measurement request sent by the candidate UPF network element, the access network device feeds back a response message to the candidate UPF network element. The candidate UPF network element may determine the latency of transmission between the candidate UPF network element and the access network device based on the response message sent by the access network device. Further, the candidate UPF network element sends, to the first network element, a response message including the latency of transmission between the candidate UPF network element and the access network device.

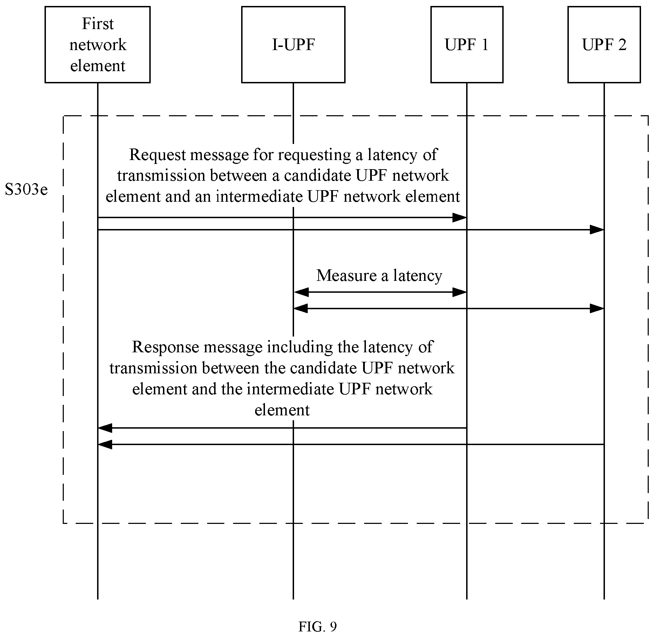

Optionally, if the latency parameter further includes a latency of transmission between the candidate UPF network element and an intermediate UPF network element (I-UPF), assuming that candidate UPF network elements include a UPF 1 and a UPF 2, as shown in FIG. 9, the first network element may obtain the latency of transmission between the candidate UPF network element and the intermediate UPF network element in a manner shown in S303e.

S303e: The first network element sends, to each candidate UPF network element, a request message for requesting a latency of transmission between the candidate UPF network element and the intermediate UPF. After receiving the request message, the candidate UPF network element requests the intermediate UPF network element to measure a latency. After receiving a measurement request sent by the candidate UPF network element, the intermediate UPF network element feeds back a response message to the candidate UPF network element. The candidate UPF network element may determine the latency of transmission between the candidate UPF network element and the intermediate UPF network element based on the response message sent by the access network device. Further, the candidate UPF network element sends, to the first network element, a response message including the latency of transmission between the candidate UPF network element and the intermediate UPF network element.

S304: The first network element determines the target EAS and the target UPF based on the obtained parameter. Optionally, if the session establishment request message includes the latency requirement and/or the load requirement, the first network element may further determine the target EAS and the target UPF based on the latency requirement and/or the load requirement.

Optionally, after determining the target EAS and the target UPF, the first network element may further send a session establishment response message to the SMF network element. The session establishment response message includes information about the target EAS and the target UPF network element.

S305: A channel between the target EAS and the target UPF network element is established, and the target EAS accesses a core network through the target UPF network element.

S306: The SMF network element establishes a user plane channel between the UE and the target UPF network element. The UE may use, through the target UPF, a service provided by the target EAS.

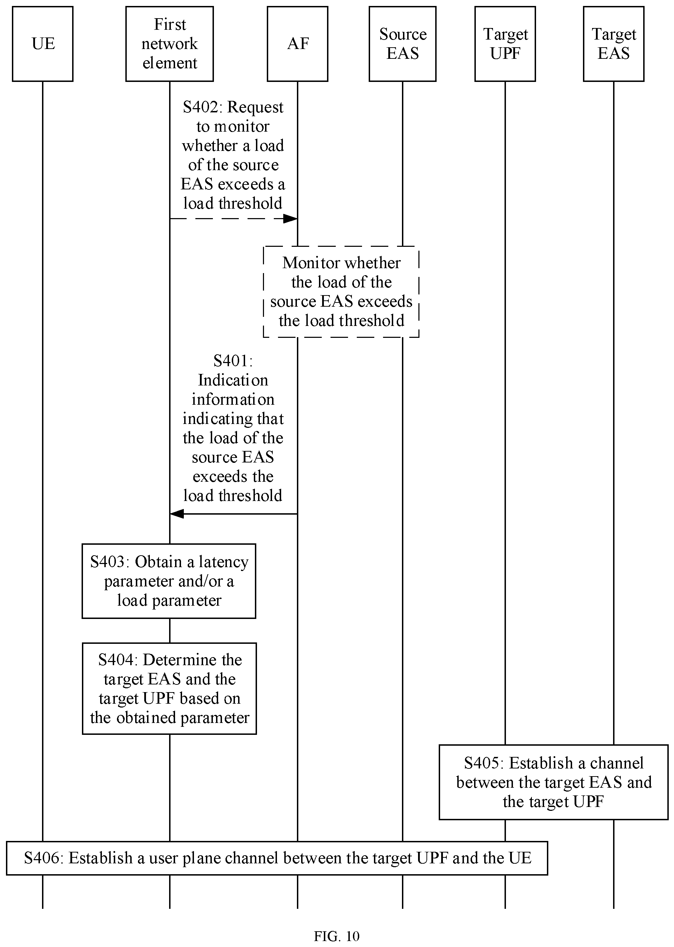

It is assumed that a target EAS is determined in a scenario in which session establishment is completed. As shown in FIG. 10, a possible procedure may include the following steps.

S401: An AF network element sends, to a first network element, indication information indicating that a load of a source EAS exceeds a load threshold, and correspondingly, the first network element receives the indication information from the AF network element.

The first network element may determine, based on the indication information, that the target EAS needs to be selected, or the target EAS needs to be reselected. Further, the first network element may further determine that a target L-UPF needs to be reselected.

Optionally, before S401, the method may further include S402: The first network element requests the application function network element to monitor whether the load of the source EAS exceeds the load threshold, and correspondingly, the application function network element receives a request message from the first network element. The application function network element starts to monitor, based on the request of the first network element, whether the load of the source EAS exceeds the load threshold, and when determining that the load exceeds the load threshold, sends, to the first network element, the indication information indicating that the load of the source EAS exceeds the load threshold.

S403: The first network element obtains a latency parameter and/or a load parameter.

For example, the latency parameter includes a latency of transmission between a candidate EAS and a candidate UPF. It is assumed that candidate UPF network elements include a UPF 1 and a UPF 2, and candidate EASs include an EAS 1 and an EAS 2. The first network element may obtain the latency parameter and the load parameter in one or more manners in FIG. 7A and FIG. 7B, FIG. 8, or FIG. 9. For details, refer to the foregoing descriptions.

S404: The first network element determines the target EAS and a target UPF based on the obtained parameter.

S405: A channel between the target EAS and the target UPF network element is established, and the target EAS accesses a core network through the target UPF network element.

S406: An SMF network element establishes a user plane channel between UE and the target UPF network element. The UE may use, through the target UPF, a service provided by the target EAS.

It may be understood that the procedure shown in FIG. 5 or FIG. 10 is merely a logical schematic procedure provided for ease of understanding of embodiments of this application, and does not represent an actual time sequence of embodiments of this application. A time sequence between different steps in FIG. 5 or FIG. 10 is not limited in embodiments of this application. For example, in FIG. 5, that S306 is after S305 does not mean that S305 is completed before S306, but S305 and S306 may be processes independent of each other.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be each network element in the foregoing method embodiments, or an apparatus including each of the foregoing network elements, or a component that can be used in each of the foregoing network elements. It may be understood that, to implement the foregoing functions, the communication apparatus includes a corresponding hardware structure and/or software module for performing the functions. A person skilled in the art should be easily aware that, with reference to the example units and algorithm steps described in the embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module corresponding to each function may be obtained through division, or two or more functions may be integrated into one processing module. The integrated module may be implemented in a form of hardware, or may be implemented in a form of a software functional module. It should be understood that division into the modules in embodiments of this application is an example, and is merely logical function division. In actual implementation, there may be another division manner.

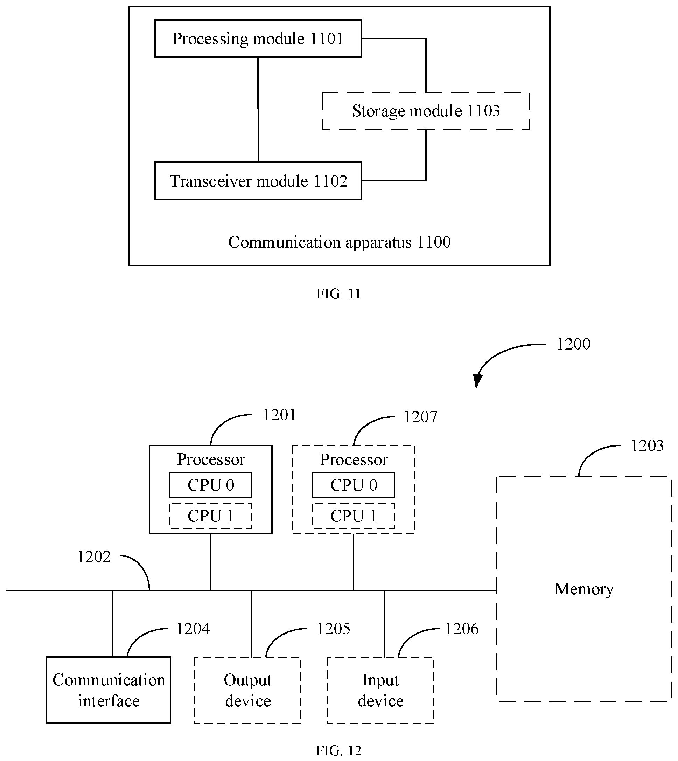

FIG. 11 is a diagram of a structure of a communication apparatus 1100. The communication apparatus 1100 includes a processing module 1101 and a transceiver module 1102. Optionally, the communication apparatus 1100 may further include a storage module 1103. The transceiver module 1102 may also be referred to as a transceiver unit, is configured to implement receiving and sending functions, and for example, may be a transceiver circuit, a transceiver, a transceiver machine, or a communication interface.

For example, the communication apparatus 1100 is the first network element in the foregoing embodiments. In a possible implementation:
the transceiver module 1102 is configured to obtain one or more of the following parameters: a latency parameter or a load parameter, where the latency parameter includes a latency of transmission between at least one edge application service and a user plane function network element, and the load parameter includes a load of the at least one edge application service; and the processing module 1101 is configured to select a target edge application service from the at least one edge application service based on the obtained parameter.

Optionally, the processing module 1101 is further configured to determine a target user plane function network element based on the obtained parameter.

Optionally, when the obtained parameter includes the latency parameter, the target user plane function network element satisfies a latency requirement. The latency requirement includes a latency requirement for transmission between the edge application service and the user plane function network element, or a latency requirement for transmission between the edge application service and a terminal device.

Optionally, the transceiver module 1102 is further configured to send information about the target user plane function network element to a session management function network element.

Optionally, the transceiver module 1102 is further configured to send information about the target edge application service to the session management function network element.

Optionally, when the obtained parameter includes the latency parameter, the target edge application service is an edge application service that satisfies the latency requirement. The latency requirement includes the latency requirement for transmission between the edge application service and the user plane function network element, or the latency requirement for transmission between the edge application service and the terminal device. When the obtained parameter includes the load parameter, the target edge application service is an edge application service that satisfies a load requirement. The load requirement is a load requirement for the edge application service.

Optionally, the transceiver module 1102 is further configured to receive a first message from the session management network element, where the first message is used to request to establish a session, and the first message includes one or more of the following requirements: the latency requirement or the load requirement. Alternatively, optionally, the transceiver module 1102 is further configured to receive one or more of the following requirements from an application function network element: the latency requirement or the load requirement.

Optionally, the transceiver module 1102 is further configured to receive a second message from the application function network element, where the second message includes first indication information, and the first indication information indicates that a load of a source edge application service exceeds a load threshold. The processing module 1101 is further configured to determine, based on the second message, to select the target edge application service.

Optionally, the transceiver module 1102 is further configured to send a third message to the application function network element, where the third message is used to request the application function network element to monitor whether the load of the source edge application service exceeds the load threshold.

Optionally, the transceiver module 1102 is specifically configured to obtain the parameter in the following manner: receiving a fourth message from the user plane function network element, a network capability exposure function network element, or the application function network element, where the fourth message includes the one or more parameters.

Optionally, the transceiver module 1102 is further configured to send a fifth message, where the fifth message is used to request latency-related information or load-related information. In this case, the fourth message is a response message for the fifth message.

For example, the communication apparatus 1100 is the session management network element in the foregoing embodiments. In a possible implementation:
the transceiver module 1102 is configured to send one or more of the following requirements to a first network element: a latency requirement or a load requirement, where the one or more requirements are used by the first network element to determine a target edge application service, the latency requirement includes a latency requirement for transmission between an edge application service and a user plane function network element or a latency requirement for transmission between an edge application service and a terminal device, and the load requirement is a load requirement for the edge application service; and the transceiver module 1102 is further configured to receive information about the target edge application service from the first network element.

Optionally, the one or more requirements are further used by the first network element to determine a target application function network element. The transceiver module 1102 is further configured to receive information about the target application function network element from the first network element.

Optionally, the one or more requirements are carried in a first message, and the information about the target edge application service is carried in a response message for the first message. The first message is used to request to establish a session.

For example, the communication apparatus 1100 is the user plane function network element in the foregoing embodiments. In a possible implementation:
the transceiver module 1102 is configured to receive a fifth message from a first network element, where the fifth message is used to request latency-related information or load-related information; and the transceiver module 1102 is further configured to send a fourth message to the first network element, where the fourth message is a response message for the fifth message, and the fourth message includes one or more of the following parameters: a latency parameter or a load parameter, where the latency parameter includes a latency of transmission between at least one edge application service and the user plane function network element, and the load parameter includes a load of at least one candidate edge application service; and the one or more parameters included in the fourth message are used by the first network element to select a target edge application service from the at least one candidate edge application service.

Optionally, the latency parameter further includes one or more of the following: a latency of transmission between the user plane function network element and an access network device, or a latency of transmission between the user plane function network element and an intermediate user plane function network element, and the intermediate user plane function network element is configured to transfer information between the user plane function network element and the access network device.

For example, the communication apparatus 1100 is the application function network element in the foregoing embodiments. In a possible implementation:
the transceiver module 1102 is configured to receive a fifth message from a first network element, where the fifth message is used to request latency-related information or load-related information; and the transceiver module 1102 is further configured to send a fourth message to the first network element, where the fourth message is a response message for the fifth message, and the fourth message includes one or more of the following parameters: a latency parameter or a load parameter, where the latency parameter includes a latency of transmission between at least one edge application service and a user plane function network element, and the load parameter includes a load of the at least one edge application service; and the one or more parameters included in the fourth message are used by the first network element to select a target edge application service from the at least one edge application service.

Optionally, the transceiver module 1102 is further configured to send one or more of the following requirements to the first network element: a latency requirement or a load requirement. The one or more requirements are used by the first network element to select the target edge application service. The latency requirement includes a latency requirement for transmission between the edge application service and the user plane function network element, or a latency requirement for transmission between the edge application service and a terminal device, and the load requirement is a load requirement for the edge application service.

Optionally, the transceiver module 1102 is further configured to send a second message to the first network element, where the second message includes first indication information, the first indication information indicates that a load of a source edge application service exceeds a load threshold, and the second message is used by the first network element to determine to select the target edge application service.

Optionally, the transceiver module 1102 is further configured to receive a third message from the first network element, where the third message is used to request the application function network element to monitor whether the load of the source edge application service exceeds the load threshold. The processing module 1101 is configured to monitor, based on the third message, whether the load of the source edge application service exceeds the load threshold.

All related content of each step in the foregoing method embodiment may be cited to a function description of a corresponding functional module, and details are not described herein again.

Optionally, the module in FIG. 11 may also be referred to as a unit. For example, the processing module may be referred to as a processing unit, and the transceiver module may be referred to as a transceiver unit. In addition, in the embodiment shown in FIG. 11, a name of each unit may not be the name shown in the figure. For example, the transceiver module may also be referred to as a communication module or a communication unit.

When each unit in FIG. 11 is implemented in a form of a software functional module and sold or used as an independent product, the unit may be stored in a computer-readable storage medium. Based on such an understanding, the technical solutions in embodiments of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor (processor) to perform all or some of the steps of the methods described in embodiments of this application. A storage medium for storing the computer software product includes any medium that can store program code, like a USB flash drive, a removable hard disk, a read-only memory (read-only memory, ROM), a random access memory (random access memory, RAM), a magnetic disk, or an optical disc.

In embodiments of this application, the communication apparatus 1100 is presented in a form of obtaining each functional module through division in an integrated manner. The "module" herein may be an application-specific integrated circuit (application-specific integrated circuit, ASIC), a circuit, a processor that executes one or more software or firmware programs and a memory, an integrated logic circuit, and/or another component that can provide the foregoing functions.

In a simple embodiment, a person skilled in the art may figure out that the communication apparatus 1100 may be in a form of the communication apparatus shown in FIG. 12.

As shown in FIG. 12, the communication apparatus 1200 includes one or more processors 1201, a communication line 1202, and at least one communication interface (only an example in which a communication interface 1204 and one processor 1201 are included is used for description in FIG. 12), and optionally, may further include a memory 1203.

The processor 1201 may be a general-purpose central processing unit (central processing unit, CPU), a microprocessor, an ASIC, or one or more integrated circuits configured to control program execution in the solutions of this application.

The communication line 1202 may include a path for connecting different components.

The communication interface 1204 may be a transceiver module configured to communicate with another device or a communication network, for example, an Ethernet, a RAN, a terminal, or a wireless local area network (wireless local area network, WLAN). For example, the transceiver module may be an apparatus such as a transceiver or a transceiver machine. Optionally, the communication interface 1204 may alternatively be a transceiver circuit or an input/output interface located in the processor 1201, configured to implement signal input and signal output of the processor.

The memory 1203 may be an apparatus having a storage function. For example, the memory may be a read-only memory (read-only memory, ROM) or another type of static storage device capable of storing static information and instructions, or may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer. However, this is not limited. The memory may exist independently, and is connected to the processor through the communication line 1202. The memory may alternatively be integrated with the processor.

The memory 1203 is configured to store computer-executable instructions for performing the solutions in this application, and the processor 1201 controls execution. The processor 1201 is configured to execute the computer-executable instructions stored in the memory 1203, to implement a communication method provided in embodiments of this application.

Alternatively, optionally, in embodiments of this application, the processor 1201 may perform a processing-related function in a communication method provided in the following embodiments of this application, and the communication interface 1204 is responsible for communicating with another device or a communication network. This is not specifically limited in embodiments of this application.

Optionally, the computer-executable instructions in this embodiment of this application may also be referred to as application program code. This is not specifically limited in this embodiment of this application.

During specific implementation, in an embodiment, the processor 1201 may include one or more CPUs, for example, a CPU 0 and a CPU 1 in FIG. 12.

During specific implementation, in an embodiment, the communication apparatus 1200 may include a plurality of processors, for example, the processor 1201 and a processor 1207 in FIG. 12. Each of these processors may be a single-core (single-core) processor, or may be a multi-core (multi-core) processor. The processor herein may include but is not limited to at least one of the following: various compute devices that run software, such as a CPU, a microprocessor, a digital signal processor (digital signal processor, DSP), a microcontroller unit (microcontroller unit, MCU), or an artificial intelligence processor. Each type of compute device may include one or more cores for executing software instructions to perform an operation or processing.

During specific implementation, in an embodiment, the communication apparatus 1200 may further include an output device 1205 and an input device 1206. The output device 1205 communicates with the processor 1201, and may display information in a plurality of manners. For example, the output device 1205 may be a liquid crystal display (liquid crystal display, LCD), a light-emitting diode (light-emitting diode, LED) display device, a cathode ray tube (cathode ray tube, CRT) display device, or a projector (projector). The input device 1206 communicates with the processor 1201, and may receive an input from a user in a plurality of manners. For example, the input device 1206 may be a mouse, a keyboard, a touchscreen device, a sensing device, or the like.

The communication apparatus 1200 may also be referred to as a communication device sometimes, and may be a general-purpose device or a dedicated device. For example, the communication apparatus 1200 may be various network elements, an access network device, or a device having a structure similar to that in FIG. 12 above. A type of the communication apparatus 1200 is not limited in embodiments of this application.

In addition, the composition structure shown in FIG. 12 does not constitute a limitation on the communication apparatus. In addition to the parts shown in FIG. 12, the communication apparatus 1200 may include more or fewer parts than those shown in the figure, or some parts may be combined, or different part arrangements may be used.

Optionally, a function/an implementation process of the transceiver module 1102 and the processing module 1101 in FIG. 11 may be implemented by invoking, by the processor 1201 in the communication apparatus 1200 shown in FIG. 12, the computer-executable instructions stored in the memory 1203. Alternatively, a function/an implementation process of the processing module 1101 in FIG. 11 may be implemented by invoking, by the processor 1201 in the communication apparatus 1200 shown in FIG. 12, the computer-executable instructions stored in the memory 1203, and a function/an implementation process of the transceiver module 1102 in FIG. 11 may be implemented by using the communication interface 1204 in the communication apparatus 1200 shown in FIG. 12.

It should be understood that one or more of the foregoing modules or units may be implemented by using software, hardware, or a combination thereof. When any one of the foregoing modules or units is implemented by using software, the software exists in a form of computer program instructions, and is stored in the memory. The processor may be configured to execute the program instructions and implement the foregoing method procedure. The processor may be built in a SoC or an ASIC, or may be an independent semiconductor chip. In addition to the core configured to perform an operation or processing by executing software instructions, the processor may further include a necessary hardware accelerator, for example, an FPGA, a programmable logic device (programmable logic device, PLD), or a logic circuit that implements a dedicated logic operation.

When the foregoing modules or units are implemented by using hardware, the hardware may be any one or any combination of a CPU, a microprocessor, a DSP chip, an MCU, an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a communication apparatus (for example, the communication apparatus may be a chip or a chip system). The communication apparatus includes a processor, configured to implement the method in any one of the foregoing method embodiments. In a possible design, the communication apparatus further includes a memory. The memory is configured to store necessary program instructions and necessary data. The processor may invoke program code stored in the memory, to indicate the communication apparatus to perform the method in any one of the foregoing method embodiments. Certainly, the communication apparatus may not include a memory. When being a chip system, the communication apparatus may include a chip, or may include a chip and another discrete component. This is not specifically limited in embodiments of this application.

Optionally, an embodiment of this application further provides a computer-readable storage medium. The computer-readable storage medium stores a computer program or instructions. When the computer program or instructions are run on a communication apparatus, the communication apparatus is caused to perform the method in any one of the foregoing method embodiments or any one of the implementations of the foregoing method embodiments.

Optionally, an embodiment of this application further provides a communication system. The communication system includes a plurality of network elements described in the foregoing method embodiments, for example, includes the first network element and the second network element.

All or some of the foregoing embodiments may be implemented by software, hardware, firmware, or any combination thereof. When a software program is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device such as a server or a data center that integrates one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, the word "comprise" (comprising) does not exclude another component or step, and "a" or "one" does not exclude a meaning of plurality. A single processor or another unit may implement several functions enumerated in the claims. Some measures are recorded in dependent claims that are different from each other, but this does not indicate that these measures cannot be combined to produce a better effect.

Although this application is described with reference to specific features and embodiments, it is clear that various modifications and combinations may be made to this application without departing from the scope of this application. Correspondingly, this specification and the accompanying drawings are merely example description of this application defined by the appended claims and are considered to cover any and all modifications, variations, combinations, or equivalents in the scope of this application. It is clear that a person skilled in the art may make various modifications and variations to this application without departing from the scope of this application. Thus, this application is intended to cover these modifications and variations, provided that they fall within the scope of the claims of this application and their equivalent technologies.

## Claims

1. A communication method, wherein the method comprises:
obtaining, by a first network element, one or more of the following parameters: a latency parameter or a load parameter, wherein the latency parameter comprises a latency of transmission between at least one edge application service and a user plane function network element, and the load parameter comprises a load of the at least one edge application service; and
selecting, by the first network element, a target edge application service from the at least one edge application service based on the obtained parameter.

2. The method according to claim 1, wherein the method further comprises:
determining, by the first network element, a target user plane function network element based on the obtained parameter.

3. The method according to claim 2, wherein when the obtained parameter comprises the latency parameter, the target user plane function network element satisfies a latency requirement; and the latency requirement comprises a latency requirement for transmission between the edge application service and the user plane function network element, or a latency requirement for transmission between the edge application service and a terminal device.

4. The method according to claim 2 or 3, wherein the method further comprises:
sending, by the first network element, information about the target user plane function network element to a session management function network element.

5. The method according to any one of claims 1 to 4, wherein the method further comprises:
sending, by the first network element, information about the target edge application service to the session management function network element.

6. The method according to any one of claims 1 to 5, wherein when the obtained parameter comprises the latency parameter, the target edge application service is an edge application service that satisfies the latency requirement; and the latency requirement comprises the latency requirement for transmission between the edge application service and the user plane function network element, or the latency requirement for transmission between the edge application service and the terminal device; and/or
when the obtained parameter comprises the load parameter, the target edge application service is an edge application service that satisfies a load requirement; and the load requirement is a load requirement for the edge application service.

7. The method according to claim 3 or 6, wherein the method further comprises:
receiving, by the first network element, a first message from the session management function network element, wherein the first message is used to request to establish a session, and the first message comprises one or more of the following requirements: the latency requirement or the load requirement; or
receiving, by the first network element, one or more of the following requirements from an application function network element: the latency requirement or the load requirement.

8. The method according to any one of claims 1 to 7, wherein the method further comprises:
receiving, by the first network element, a second message from the application function network element, wherein the second message comprises first indication information, and the first indication information indicates that a load of a source edge application service exceeds a load threshold; and
determining, by the first network element based on the second message, to select the target edge application service.

9. The method according to claim 8, wherein the method further comprises:
sending, by the first network element, a third message to the application function network element, wherein the third message is used to request the application function network element to monitor whether the load of the source edge application service exceeds the load threshold.

10. The method according to any one of claims 1 to 9, wherein obtaining, by the first network element, the one or more of the following parameters comprises:
receiving, by the first network element, a fourth message from the user plane function network element, a network capability exposure function network element, or the application function network element, wherein the fourth message comprises the one or more parameters.

11. The method according to claim 10, wherein the method further comprises:
sending, by the first network element, a fifth message, wherein the fifth message is used to request latency-related information or load-related information, and the fourth message is a response message for the fifth message.

12. A communication method, wherein the method comprises:
sending, by a session management function network element, one or more of the following requirements to a first network element: a latency requirement or a load requirement, wherein the one or more requirements are used by the first network element to determine a target edge application service, the latency requirement comprises a latency requirement for transmission between an edge application service and a user plane function network element or a latency requirement for transmission between an edge application service and a terminal device, and the load requirement is a load requirement for the edge application service.

13. The method according to claim 12, wherein the one or more requirements are further used by the first network element to determine a target application function network element, and the method further comprises:
receiving, by the session management function network element, information about the target application function network element from the first network element.

14. The method according to claim 12 or 13, wherein the method further comprises:
receiving, by the session management function network element, information about the target edge application service from the first network element.

15. A communication method, wherein the method comprises:
receiving, by a user plane function network element, a fifth message from a first network element, wherein the fifth message is used to request latency-related information or load-related information; and
sending, by the user plane function network element, a fourth message to the first network element, wherein the fourth message is a response message for the fifth message, the fourth message comprises one or more of the following parameters: a latency parameter or a load parameter, the latency parameter comprises a latency of transmission between at least one edge application service and the user plane function network element, the load parameter comprises a load of the at least one edge application service, and the one or more parameters are used by the first network element to select a target edge application service from the at least one edge application service.

16. The method according to claim 15, wherein the latency parameter further comprises one or more of the following: a latency of transmission between the user plane function network element and an access network device, or a latency of transmission between the user plane function network element and an intermediate user plane function network element, and the intermediate user plane function network element is configured to transfer information between the user plane function network element and the access network device.

17. A communication method, wherein the method comprises:
receiving, by an application function network element, a fifth message from a first network element, wherein the fifth message is used to request latency-related information or load-related information; and
sending, by the application function network element, a fourth message to the first network element, wherein the fourth message is a response message for the fifth message, the fourth message comprises one or more of the following parameters: a latency parameter or a load parameter, the latency parameter comprises a latency of transmission between at least one edge application service and a user plane function network element, the load parameter comprises a load of the at least one edge application service, and the one or more parameters are used by the first network element to select a target edge application service from the at least one edge application service.

18. The method according to claim 17, wherein the method further comprises:
sending, by the application function network element, one or more of the following requirements to the first network element: a latency requirement or a load requirement, wherein the one or more requirements are used by the first network element to select the target edge application service, the latency requirement comprises a latency requirement for transmission between the edge application service and the user plane function network element or a latency requirement for transmission between the edge application service and a terminal device, and the load requirement is a load requirement for the edge application service.

19. The method according to claim 17 or 18, wherein the method further comprises:
sending, by the application function network element, a second message to the first network element, wherein the second message comprises first indication information, the first indication information indicates that a load of a source edge application service exceeds a load threshold, and the second message is used by the first network element to determine to select the target edge application service.

20. The method according to claim 19, wherein the method further comprises:
receiving, by the application function network element, a third message from the first network element, wherein the third message is used to request the application function network element to monitor whether the load of the source edge application service exceeds the load threshold; and
monitoring, by the application function network element based on the third message, whether the load of the source edge application service exceeds the load threshold.

21. A communication system, wherein the communication system comprises a first network element and a second network element;
the first network element is configured to send a fifth message to the second network element, wherein the fifth message is used to request latency-related information or load-related information;
the second network element is configured to receive the fifth message, and send a fourth message to the first network element, wherein the fourth message is a response message for the fifth message, the fourth message comprises one or more of the following parameters: a latency parameter or a load parameter, the latency parameter comprises a latency of transmission between at least one edge application service and a user plane function network element, and the load parameter comprises a load of the at least one edge application service; and
the first network element is further configured to receive the fourth message, and select a target edge application service from the at least one edge application service based on the parameter comprised in the fourth message.

22. The communication system according to claim 21, wherein the second network element is the user plane function network element, the latency parameter further comprises one or more of the following: a latency of transmission between the user plane function network element and an access network device, or a latency of transmission between the user plane function network element and an intermediate user plane function network element, and the intermediate user plane function network element is configured to transfer information between the user plane function network element and the access network device.

23. The communication system according to claim 21 or 22, wherein
the first network element is further configured to receive a second message from an application function network element, wherein the second message comprises first indication information, and the first indication information indicates that a load of a source edge application service exceeds a load threshold; and
the first network element is further configured to determine, based on the second message, to select the target edge application service.

24. The communication system according to claim 23, wherein
the first network element is further configured to send a third message to the application function network element, wherein the third message is used to request the application function network element to monitor whether the load of the source edge application service exceeds the load threshold.

25. The communication system according to any one of claims 21 to 24, wherein
the first network element is further configured to receive one or more requirements: a latency requirement or a load requirement, from a session management function network element or the application function network element, wherein the latency requirement comprises a latency requirement for transmission between the edge application service and the user plane function network element or a latency requirement for transmission between the edge application service and a terminal device, and the load requirement is a load requirement for the edge application service, wherein
when the fourth message comprises the latency parameter, the target edge application service is an edge application service that satisfies the latency requirement; and/or when the fourth message comprises the load parameter, the target edge application service is an edge application service that satisfies the load requirement.

26. The communication system according to any one of claims 21 to 25, wherein
the first network element is further configured to send information about the target edge application service to the session management function network element.

27. A network element, wherein the network element comprises a module or a unit configured to perform the method according to any one of claims 1 to 11, or the network element comprises a module or a unit configured to perform the method according to any one of claims 12 to 14, or the network element comprises a module or a unit configured to perform the method according to claim 15 or 16, or the network element comprises a module or a unit configured to perform the method according to any one of claims 17 to 20.

28. A communication apparatus, wherein the communication apparatus comprises a processor, and the processor is configured to execute a computer program or instructions stored in a memory, to cause the communication apparatus to perform the method according to any one of claims 1 to 11, 12 to 14, 15 to 16, or 17 to 20.

29. A chip system, comprising a processor and an interface circuit, wherein
the interface circuit is configured to receive computer-executable instructions and transmit the computer-executable instructions to the processor; and
the processor is configured to execute the computer-executable instructions, to cause the communication apparatus to perform the method according to any one of claims 1 to 11, 12 to 14, 15 to 16, or 17 to 20.

30. A computer-readable storage medium, wherein the computer-readable storage medium stores a computer program or instructions, and when the computer program or the instructions are executed by a computer, the computer is caused to perform the method according to any one of claims 1 to 11, 12 to 14, 15 to 16, or 17 to 20.
